(19) Europäisches Patentamt / European Patent Office / Office européen des brevets

(11) **EP 4 090 993 B1**

(12) **FASCICULE DE BREVET EUROPEEN**

(45) Date de publication et mention de la délivrance du brevet:
**04.12.2024 Bulletin 2024/49**

(21) Numéro de dépôt: **21700308.6**

(22) Date de dépôt: **14.01.2021**

(51) Classification Internationale des Brevets (IPC):
*G01S 17/34* (2020.01)   *G01S 7/4912* (2020.01)
*G01S 7/481* (2006.01)   *G01S 17/894* (2020.01)

(52) Classification Coopérative des Brevets (CPC):
**G01S 17/34; G01S 7/4811; G01S 7/4814; G01S 7/4816; G01S 7/4818; G01S 7/4917; G01S 17/894**

(86) Numéro de dépôt international:
**PCT/EP2021/050681**

(87) Numéro de publication internationale:
**WO 2021/144357 (22.07.2021 Gazette 2021/29)**

(54) **SYSTEME D'IMAGERIE LIDAR COHÉRENT**

KOHÄRENTES LIDAR-ABBILDUNGSSYSTEM

COHERENT LIDAR IMAGING SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.01.2020 FR 2000408**

(43) Date de publication de la demande:
**23.11.2022 Bulletin 2022/47**

(73) Titulaire: **Commissariat à l'Energie Atomique et aux Energies Alternatives**
**75015 Paris (FR)**

(72) Inventeur: **FREY, Laurent**
**38054 GRENOBLE CEDEX 09 (FR)**

(74) Mandataire: **Brevalex**
**Tour Trinity**
**1 B Place de la Défense**
**92400 Courbevoie (FR)**

(56) Documents cités:
WO-A1-2019/041274   US-A- 5 610 705
US-A1- 2017 118 423   US-A1- 2018 232 048

• FIROOZ AFLATOUNI ET AL: "Nanophotonic coherent imager", OPTICS EXPRESS, vol. 23, no. 4, 19 February 2015 (2015-02-19), pages 5117, XP055764834, DOI: 10.1364/OE.23.005117
• BRIAN W KRAUSE ET AL: "Motion compensated frequency modulated continuous wave 3D coherent imaging ladar with scannerless architecture", APPLIED OPTICS, OPTICAL SOCIETY OF AMERICA, WASHINGTON, DC, US, vol. 51, no. 36, 20 December 2012 (2012-12-20), pages 8745 - 8761, XP001580743, ISSN: 0003-6935, DOI: HTTP://DX.DOI.ORG/10.1364/AO.51.008745
• AMANN M-C ET AL: "LASER RANGING: A CRITICAL REVIEW OF USUAL TECHNIQUES FOR DISTANCE MEASUREMENT", OPTICAL ENGINEERING, SOC. OF PHOTO-OPTICAL INSTRUMENTATION ENGINEERS, BELLINGHAM, vol. 40, no. 1, 1 January 2001 (2001-01-01), pages 10 - 19, XP001092786, ISSN: 0091-3286, DOI: 10.1117/1.1330700

**Description**

**DOMAINE TECHNIQUE**

La présente invention concerne le domaine de l'imagerie d'une scène à observer par un LIDAR cohérent et plus particulièrement dans le domaine de l'imagerie tridimensionnelle par lidar cohérent à détection hétérodyne.

**ETAT DE LA TECHNIQUE ANTERIEURE**

L'imagerie d'une scène par LIDAR (*Light Détection and Ranging,* en anglais) à détection hétérodyne tire parti de la nature de l'émission cohérente d'une source laser afin d'amplifier le signal utile réfléchi par la scène par un signal issu d'une voie de référence et cohérent avec le signal utile.

Dans la technique LIDAR de type FMCW, la fréquence optique de la source laser est modulée, par exemple avec une rampe linéaire périodique. La lumière issue de la source laser est divisée en deux voies. Une partie de la lumière (voie objet) est projetée sur un point de la scène où elle est rétrodiffusée, partiellement en direction d'un photodétecteur. L'autre partie (voie de référence) est envoyée vers le photodétecteur sans passer par la scène. Les deux voies interfèrent sur le photodétecteur et forment un signal hétérodyne. Les interférences produisent des battements dont la fréquence est proportionnelle au retard entre les deux voies, donc à la distance entre la scène et le photodétecteur.

Plus précisément, pour une rampe linéaire, la fréquence de battement des oscillations est $f_R = \frac{2Bz}{cT}$ avec B l'excursion de fréquence optique (ou *chirp)* pendant la durée T de la rampe, z la distance, c la vitesse de la lumière. On déduit la distance z du nombre N (N ≈ T×$f_R$) de périodes mesurées pendant la durée T : $z \approx \frac{Nc}{2B}$. La résolution en distance est $\delta z \approx \frac{c}{2B}$. Il est également possible de mesurer la fréquence de battement $f_R$ par analyse spectrale par transformée de Fourier du signal hétérodyne. La technique LIDAR de type FMCW est une technique de mesure hétérodyne optique dans la mesure où elle met en jeu plusieurs fréquences optiques.

Le signal hétérodyne (i.e. signal d'interférence) contient une composante continue généralement importante et inutile, qui est supprimée par un filtre électronique passe-haut si le photorécepteur est une photodiode. Dans les montages fibrés, il est pratique d'utiliser un coupleur 3dB qui fournit, à partir des deux voies objet et référence en entrée, deux signaux de sortie en opposition de phase qui éclairent deux photodiodes en série (photodiodes balancées). Le circuit de détection permet de faire la différence des deux photocourants, donc de supprimer le DC (mode commun) et de détecter la partie AC. La partie AC est généralement amplifiée en externe par un amplificateur trans-impédance (TIA) avant d'être traitée par une électronique externe, par exemple un oscilloscope, pour mesurer la fréquence de battement $f_R$. Une fois la mesure effectuée, on change de point, c'est-à-dire qu'on réalise un balayage spatial séquentiel de la scène.

Cette technique est performante car la voie de référence ne subit pas les pertes importantes de rétrodiffusion, et sert à amplifier le signal reçu à l'aide du mélange interférométrique multipliant l'amplitude du signal utile. Cependant, l'image obtenue est par principe de type « *rolling shutter* », c'est-à-dire que la lecture des pixels est effectuée de façon séquentielle, étant donné qu'il est nécessaire de scanner la scène pour réaliser une image complète de cette dernière. Cette technique est donc perturbée par la distorsion d'images lorsque la scène comporte des objets en mouvement.

Un système d'imagerie LIDAR de type FMCW à balayage séquentiel est difficilement compatible avec une utilisation à cadence vidéo (typiquement 50Hz soit 20ms par image). Par exemple, pour une image de format QVGA (320×240 soit environ 76800 pixels), il faut changer de point toutes les 260ns et donc faire au moins une rampe en T=260ns, ce qui demande une fréquence de modulation du laser de plusieurs MHz, et même plusieurs dizaines de MHz avec des rampes linéaires. Ces valeurs sont en limite des capacités d'un laser à semiconducteur par modulation de son courant, et hors de portée d'un laser accordable par voie mécanique ou thermique. De plus, le photodétecteur doit pouvoir échantillonner le signal en respectant le théorème de Shannon, donc en pratique faire au moins 3 à 4 mesures par période 1/$f_R$ ≈ T/N ≈ 0.26ns (par exemple pour une distance typique z=100m, en visant une résolution dz=10cm, donc N~1000), i.e. des mesures à des fréquences supérieures à la dizaine de GHz, ce qui impose une forte contrainte de rapidité et également de sensibilité sur le photodétecteur.

Une solution serait d'éclairer toute la scène de façon simultanée et de paralléliser la détection avec une matrice de détecteurs hétérodynes. Cependant, la parallélisation de la technique du LIDAR décrite ci-dessus avec traitement externe n'est pas envisageable à cause du flux de données énorme (data rate = 3 $f_R$ $N_x$ $N_y$ Res = (3z/dzT) $N_x$ $N_y$ Res ~ 100Gbit/s avec z=100m, dz=10cm, T=20ms, Nx=320, Ny=240, Res=8bits) correspondant à l'échantillonnage du photocourant à l'échelle d'une matrice complète à cadence de plusieurs GHz. C'est environ 3000 fois plus que le flux de données typique avec un capteur d'image standard de même résolution (data rate = 3 × 50Hz × $N_x$ $N_y$ Res).

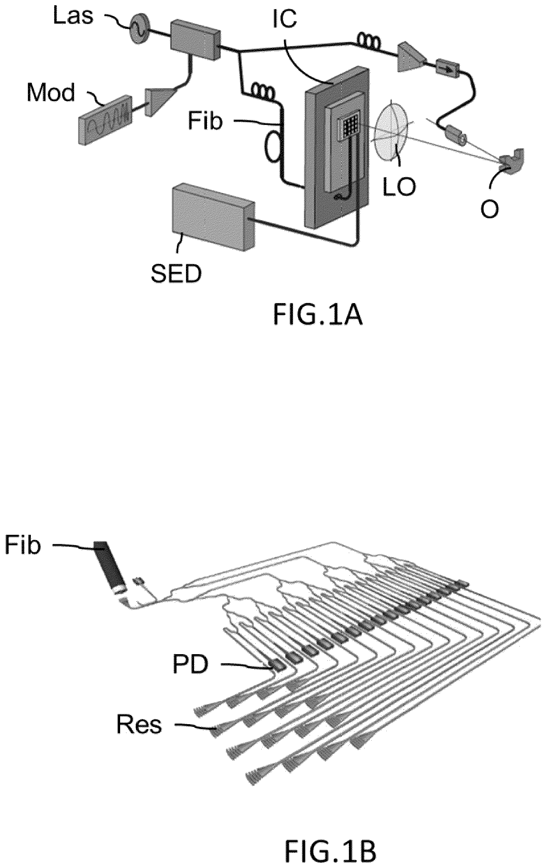

Il est connu de réaliser de l'imagerie par LIDAR de type FMCW avec un système d'imagerie optique, comme décrit dans le document de Aflatouni et al. intitulé Nanophotonic cohérent imager, Opt. Express 23 (4), 5117-5125 (2015). Comme l'illustre la figure 1A, la source laser Las est modulée en longueur d'onde par un modulateur Mod. La voie objet illumine l'objet à analyser O, et une lentille LO forme l'image de l'objet sur un imageur cohérent IC réalisé en optique intégrée, plus précisément sur une matrice de 4x4 réseaux de couplage optique Res. Comme l'illustre la figure 1B, chaque réseau Res envoie la lumière couplée vers une photodiode PD à couplage latéral située en dehors de l'image, via un guide d'onde. La voie de référence est directement envoyée sur les photodiodes par une fibre optique Fib et par un réseau de guides d'ondes et de jonctions Y. La conversion du photocourant en tension est réalisée par un amplificateur trans-impédance TIA pour chacune des 16 photodiodes. Le filtrage électronique et le traitement des signaux sont effectués à l'extérieur de la puce dans un système électronique de détection SED. La détection FMCW donne accès à la distance en chaque point de l'image.

Cependant, cette configuration d'imageur LIDAR cohérent n'est pas facilement extensible à un grand nombre de pixels. Il faudrait en effet 2N guides d'onde (N pour la voie référence et N pour la voie objet) pour N pixels, c.a.d. 2 millions de guides pour un imageur à $1000 \times 1000$ pixels, ce qui pose d'importants problèmes de routage et de surface occupée. Pour augmenter artificiellement le nombre de pixels effectif de leur imageur, les auteurs recourent à la technique des prises de vue multiples avec translations mécaniques successives de l'imageur, ce qui n'est pas adapté à des scènes en mouvement.

De plus, l'architecture proposée est sensible aux grains de speckle générés par la diffusion de la lumière cohérente par la scène (l'image de l'objet dans le plan du capteur est entachée de grains de speckle, i.e. d'une granularité laser). Les battements dus à l'interférence entre la voie de référence et la voie objet affectée par les grains de speckle sont de même fréquence mais déphasés aléatoirement entre des grains de speckle voisins. Si les pixels sont plus gros que les grains de speckle, l'amplitude des oscillations résultantes est atténuée et peut devenir non détectable. Notons que, dans la configuration de Aflatouni et al. 2015, du fait de la taille des réseaux de diffraction indiquée ($17 \times 17 \mu$m), et de la longueur d'onde de travail 1.55$\mu$m, il faudrait un nombre d'ouverture ($f_{\#}$) d'au moins 6 pour avoir des grains de speckle plus gros que les pixels. Cependant, une optique peu ouverte n'est pas favorable à la détection d'objets peu réfléchissants ou situés à des distances importantes et implique en contrepartie d'utiliser une source laser plus puissante.

Le document de Krause et al. intitulé Motion compensated frequency modulated continuous wave 3D coherent imaging ladar with scannerless architecture, Appl. Opt., 51 (36), 8745-8761 (2012), décrit une autre configuration d'un système d'imagerie LIDAR de type FMCW permettant d'obtenir une cartographie d'une scène éclairée. Il est en particulier adapté à éclairer toute la scène de manière instantanée, et comporte un détecteur matriciel. Cependant, il existe un besoin d'améliorer les performances d'un tel système d'imagerie.

Par ailleurs, le document WO 2019/041274 A1 porte sur un système d'imagerie LIDAR, et décrit notamment un dispositif optique de mise en forme du faisceau transmis. Le document US 2017/118423 A1 porte sur un système d'imagerie permettant de réduire l'éblouissement lié à un milieu diffusant (par ex. le brouillard). L'article de Amann et al. intitulé Laser ranging: a critical review of usual techniques for distance measurement Opt. Eng. 40(1) 10-19 (January 2001) porte sur des techniques de mesure de distance par laser, dont la technique FMCW. Il décrit notamment un procédé de calcul de la distance à partir de la fréquence de battement mesurée. Le document US 2018/232048 A1 décrit un guide d'onde comprenant un réseau de diffraction. Le document US 5 610 705 A porte sur la détection hétérodyne par vélocimétrie laser. Il décrit notamment un procédé pour rendre proche le front d'onde d'un faisceau de référence par rapport à celui du faisceau réfléchi.

## EXPOSE DE L'INVENTION

L'invention vise à remédier au moins en partie à certains inconvénients de l'art antérieur, et plus précisément de proposer un système d'imagerie LIDAR cohérent dont les performances sont améliorées. Ces performances peuvent se traduire par une meilleure qualité du faisceau recombiné (signal hétérodyne) détecté par les pixels du détecteur, par exemple en termes d'intensité du signal hétérodyne. Le système d'imagerie selon l'invention comporte une matrice de pixels au niveau de laquelle la scène, éclairée de manière simultanée, est imagée. Par ailleurs, chaque pixel du détecteur peut comporter un circuit électronique adapté à déterminer la fréquence du battement du faisceau recombiné (signal hétérodyne) détecté.

Un objet de l'invention est un système d'imagerie LIDAR cohérent selon la revendication 1, comprenant :

- une source laser configurée pour émettre un rayonnement laser présentant une fréquence optique modulée temporellement ;
- un dispositif optique de séparation/recombinaison comprenant au moins :

  - un dispositif optique de séparation adapté à séparer spatialement le rayonnement laser en un faisceau dit faisceau de référence et en un faisceau dit faisceau objet dirigé vers une scène à observer/éclairer ;

■ un dispositif optique de recombinaison adapté à superposer spatialement le faisceau de référence à un faisceau objet réfléchi par ladite scène, dit faisceau objet réfléchi, de manière à former un faisceau recombiné,

○ un dispositif optique d'imagerie présentant un axe optique et réalisant une image de la scène sur un détecteur en focalisant le faisceau objet réfléchi, ledit détecteur comprenant une matrice d'une pluralité de pixels $P_i$, $i \in [1,n]$, chacun des pixels comprenant un photodétecteur adapté à détecter une portion du faisceau objet réfléchi et une portion du faisceau de référence, le dispositif optique de séparation/recombinaison et le dispositif optique d'imagerie étant configurés pour que lesdites portions soient superposées spatialement de manière cohérente sur le pixel $P_i$, ledit pixel pouvant comprendre un circuit électronique de traitement adapté à calculer la fréquence $F_i$ d'un battement de la portion du faisceau objet réfléchi détectée avec la portion du faisceau de référence détectée ;

○ ledit dispositif optique de séparation/recombinaison étant en outre configuré pour former une image intermédiaire (virtuelle ou réelle) du faisceau de référence dans un plan perpendiculaire audit axe optique, dit plan image intermédiaire, ledit plan intermédiaire étant disposé de manière à tendre vers la génération des franges d'interférence en teinte plate, obtenues par interférence entre lesdites portions, sur chaque pixel $P_i$ éclairé,

○ un processeur relié au détecteur et à la source laser et configuré pour déterminer une distance de points de la scène, imagés sur lesdits pixels et construire une image de distance de ladite scène, à partir de la fréquence de battement $F_i$ calculée et associée à chaque pixel $P_i$ et à partir de la fréquence optique modulée du rayonnement laser.

Selon l'invention :

- le dispositif optique de séparation/recombinaison est configuré de manière à ce qu'une position du plan image intermédiaire sur l'axe optique dudit dispositif optique d'imagerie soit comprise dans un segment de l'axe optique correspondant à la projection sur l'axe optique d'une zone d'intersection entre des sous-faisceaux du faisceau objet réfléchi, lesdits sous-faisceaux étant des faisceaux de bordure de champ de pleine lumière. Selon des modes particuliers de l'invention :

- le dispositif optique de séparation/recombinaison est configuré de manière à ce que le plan image intermédiaire soit confondu avec un plan comprenant une pupille ou un diaphragme dudit dispositif optique d'imagerie ;

- le dispositif optique de séparation/recombinaison est configuré de manière à ce qu'une dimension latérale de ladite image intermédiaire soit inférieure ou égale à une dimension latérale de l'intersection desdits sous-faisceaux audit plan image intermédiaire ;

- le système d'imagerie comprend un dispositif optique de mise en forme, agencé sur le trajet du rayonnement laser ou du faisceau objet adapté à qu'un faisceau issu du dispositif optique de mise en forme présente une illumination uniforme sur une zone prédéterminée de la scène à observer ;

- une ouverture numérique du dispositif optique d'imagerie est adaptée pour qu'un diamètre $\phi_g$ des grains de speckle sur le détecteur soit supérieur à une dimension caractéristique $a_{pix}$ du photodétecteur de chaque pixel du détecteur ;

- le dispositif optique de séparation/recombinaison est configuré pour que, sur chaque pixel $P_i$, un axe de propagation de ladite portion du faisceau objet réfléchi forme avec un axe de propagation de ladite portion du faisceau de référence un angle $\theta$ tel que $\theta < \lambda/2\alpha_{pix}$, avec $a_{pix}$ une dimension caractéristique du photodétecteur de chaque pixel du détecteur et $\lambda$ la longueur d'onde du rayonnement laser ;

- la source laser est configurée pour que ladite fréquence optique soit modulée par une rampe linéaire périodique d'excursion B et de durée T, et pour qu'une longueur de cohérence du rayonnement laser soit deux fois supérieure à une distance prédéterminée maximale $z_{max}$ entre la scène à observer et le dispositif ;

- le calcul de la fréquence du battement est simultané pour tous les pixels dudit détecteur, chaque pixel $P_i$ comprenant une couche dite d'interconnexion dans un matériau diélectrique transparent au faisceau recombiné, ladite couche comprenant des interconnexions métalliques reliées au circuit électronique, ladite couche d'interconnexion étant agencée d'un côté du photodétecteur opposé à un côté détectant ladite portion du faisceau objet réfléchi et ladite portion du faisceau de référence, ledit circuit électronique associé au pixel $P_i$ étant configuré pour collecter un photocourant généré dans le photodétecteur représentatif dudit battement, pour le convertir en tension puis pour:

- substituer une composante DC du signal représentatif dudit battement par une valeur de tension fixe prédéterminée, générant un signal électrique dit signal substitué ; puis

- amplifier ledit signal substitué, générant un signal amplifié ;

- détecter, à l'aide d'un comparateur, des pics, ou des fronts montants ou descendants du signal amplifié,

- procéder à un comptage du nombre de périodes détectées, transmettre au processeur un signal représentatif dudit comptage du nombre de périodes détectées,

ledit processeur déterminant la distance d'un point de la scène en calculant le nombre N de périodes détectées pendant la durée T de la modulation de la fréquence optique à partir dudit signal représentatif comptage ;

- une fréquence d'échantillonnage du pixel est supérieure à deux fois, préférentiellement trois fois une fréquence $F_{R,max}$, correspondant à la fréquence du battement associé à un objet de la scène situé à la distance prédéterminée maximale $z_{max}$, et telle que $F_{R,max} = 2Bz_{max}/cT$, avec c la vitesse de la lumière ;
- le dispositif optique de séparation comprend un circuit d'optique intégré, dit premier circuit d'optique intégré, dans lequel ledit rayonnement laser est couplé, au moins un guide d'onde dudit premier circuit intégré guidant ledit faisceau de référence, le premier circuit optique intégré comprenant en outre une pluralité de guides d'onde comprenant chacun au moins un réseau de diffraction, dit réseau objet, de manière à former le faisceau objet ;
- le dispositif optique de recombinaison comprend un circuit d'optique intégré, dit deuxième circuit d'optique intégré, dans lequel ledit faisceau de référence est couplé au moyen d'un élément optique, le deuxième circuit optique intégré comprenant au moins un guide d'onde comprenant au moins un réseau de diffraction dit réseau de référence, le réseau de référence couplant le faisceau de référence vers l'espace libre et vers le dispositif optique d'imagerie, le deuxième circuit d'optique intégré étant agencé dans ledit plan image intermédiaire de manière à ce que le réseau de référence forme l'image intermédiaire ;
- l'élément optique est une fibre optique (FO), guidant ledit faisceau de référence issu du premier circuit optique intégré vers ledit deuxième circuit d'optique intégré ;
- le dispositif optique de séparation/recombinaison comprend un circuit d'optique intégré dans lequel ledit rayonnement laser est couplé, ledit circuit d'optique intégré comprenant le dispositif optique de séparation et ledit dispositif optique de recombinaison ,

   le dispositif optique de séparation comprenant une pluralité de guides d'onde du circuit d'optique intégré et comprenant chacun au moins un réseau de diffraction, dit réseau objet, lesdits réseaux objets couplant le faisceau objet vers l'espace libre et la scène à observer,
   au moins un guide d'onde dudit circuit intégré dit guide d'onde référence guidant ledit faisceau de référence vers ledit dispositif optique de recombinaison comprenant au moins un réseau de diffraction, dit réseau de référence, situé sur ledit guide d'onde de référence, le circuit d'optique intégré étant agencé dans ledit plan image intermédiaire, de manière à ce que le réseau de référence forme l'image intermédiaire ;

- le dispositif optique de séparation/recombinaison comprend en outre un dispositif optique intermédiaire, agencé après le dispositif optique de séparation, et avant le dispositif optique de recombinaison (SR), le dispositif optique intermédiaire étant adapté à focaliser le faisceau de référence et former ladite image intermédiaire.

Un autre objet de l'invention est une méthode d'imagerie par un système d'imagerie LIDAR cohérent, comprenant les étapes suivantes :

- émettre un rayonnement laser par une source laser présentant une fréquence optique modulée temporellement ;
- séparer spatialement, par un dispositif optique de séparation d'un dispositif optique de séparation/recombinaison, le rayonnement laser en un faisceau dit faisceau de référence et en un faisceau dit faisceau objet dirigé vers une scène à éclairer/observer ;
- superposer spatialement, par un dispositif optique de recombinaison du dispositif optique de séparation/recombinaison, un faisceau objet réfléchi par ladite scène, dit faisceau objet réfléchi, et le faisceau de référence, de manière à former un faisceau recombiné (signal hétérodyne) ;
- réaliser, par un dispositif optique d'imagerie, une image de la scène sur un détecteur en focalisant le faisceau objet réfléchi, ledit détecteur comprenant une matrice d'une pluralité de pixels $P_i$, $i \in [1,n]$ ;
- détecter, sur chaque pixel, une portion du faisceau objet réfléchi et une portion du faisceau de référence qui forment ensemble une portion d'un faisceau recombiné (signal hétérodyne) présentant une fréquence de battement représentative d'une distance de la scène éclairée ;

   ◦ ledit dispositif optique de séparation/recombinaison étant configuré pour former une image, dite intermédiaire, du faisceau de référence dans un plan perpendiculaire audit axe optique, dit plan image intermédiaire, la position du plan image intermédiaire sur l'axe optique étant comprise dans un segment suivant l'axe optique correspondant à la projection sur l'axe optique d'une zone d'intersection entre des sous-faisceaux du faisceau objet réfléchi, lesdits sous-faisceaux étant des faisceaux de bord de champ de pleine lumière ;

- déterminer, par un processeur relié au détecteur et à la source laser, une distance de points de la scène, imagés sur lesdits pixels et construire une image de distance de ladite scène, à partir de la fréquence de battement associée à chaque pixel et à partir de la fréquence optique modulée du rayonnement laser.

## BREVE DESCRIPTION DES FIGURES

D'autres caractéristiques, détails et avantages de l'invention ressortiront à la lecture de la description faite en référence aux dessins annexés donnés à titre d'exemples, et qui représentent, respectivement :

Les figures 1A et 1B, déjà décrites, sont des vues schématiques d'un système d'imagerie LIDAR de l'art antérieur ;

la figure 2 est une vue schématique d'un système d'imagerie selon un mode de réalisation de l'invention ;

les figures 3A et 3B sont des vues schématiques et partielles de deux exemples du système d'imagerie selon un mode de réalisation, permettant d'obtenir une cartographie de distance de toute la scène éclairée, dans une configuration en optique en espace libre (fig.3A) et dans une configuration en optique guidée (fig.3B) ;

les figures 4A à 4D sont des vues schématiques et partielles du dispositif optique d'imagerie et de la matrice de pixels, illustrant :

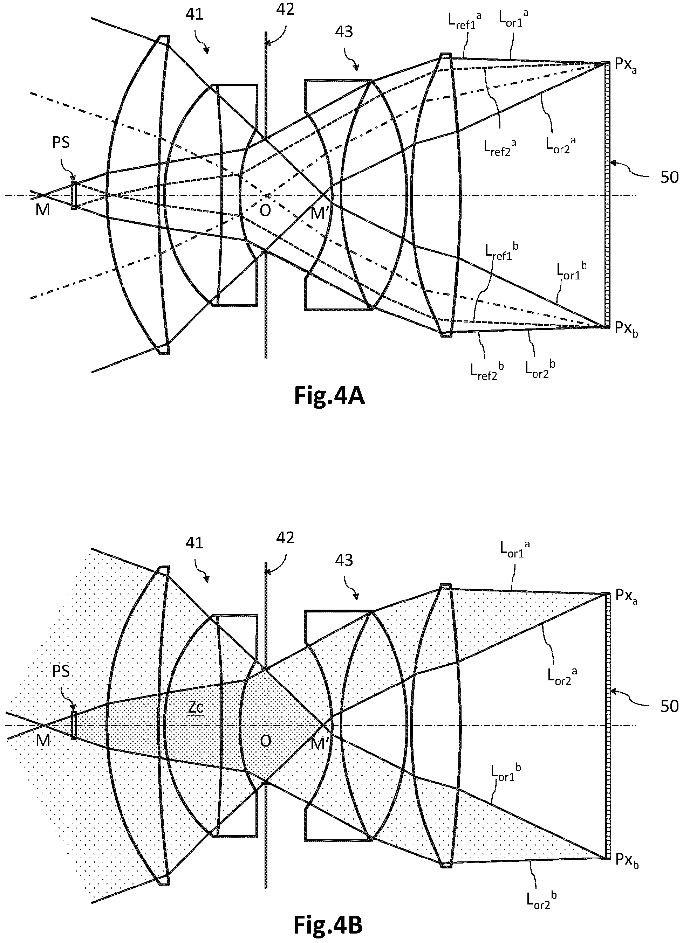

- fig.4A : pour deux pixels d'extrémité opposés et situés en bordure de la matrice de pixels : les rayons d'extrémité du faisceau objet réfléchi, et les rayons d'extrémité d'une source lumineuse équivalente du faisceau de référence ;
- fig.4B : les rayons de bord de champ de pleine lumière du faisceau objet réfléchi, mettant en évidence une zone centrale située au niveau du diaphragme d'ouverture ;

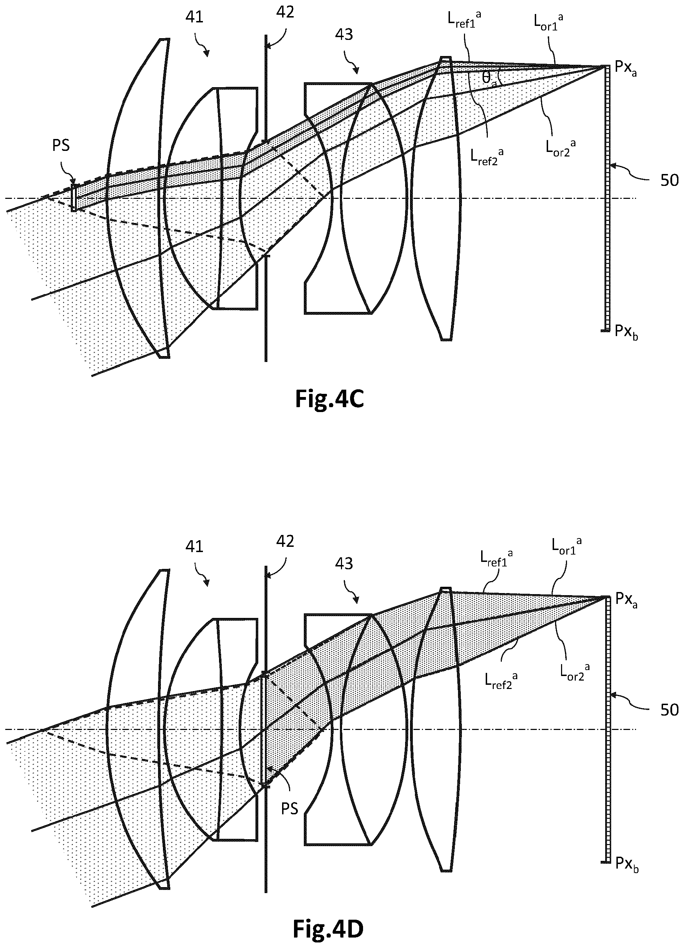

- fig.4C : pour un pixel d'extrémité situé en bordure de la matrice de pixels : les rayons d'extrémité du faisceau objet réfléchi, et les rayons d'extrémité d'une source lumineuse équivalente du faisceau de référence, celle-ci étant située en amont du diaphragme d'ouverture ;
- fig.4D : les mêmes rayons que ceux illustrés sur la fig.4C, dans le cas où la source lumineuse équivalente est située dans le plan du diaphragme d'ouverture ;

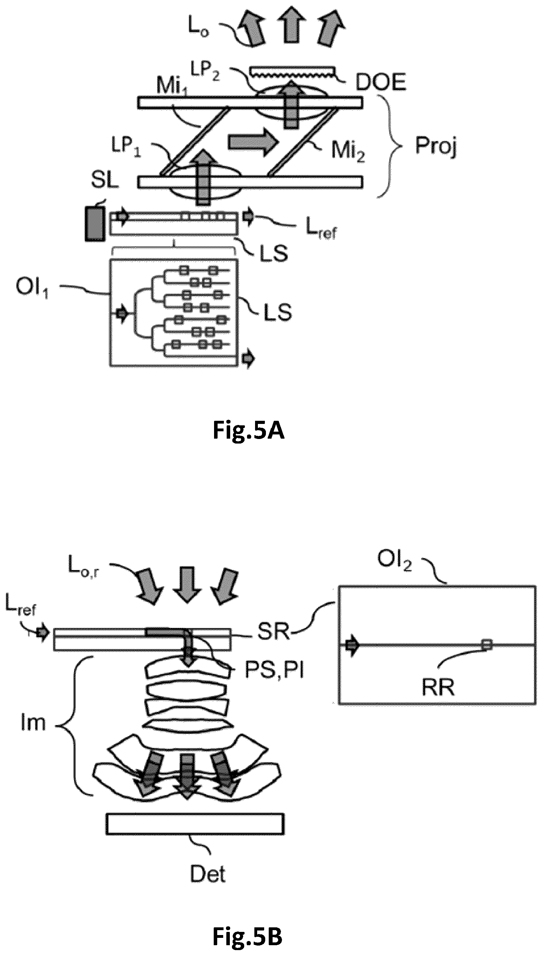

Les figures 5A et 5B sont des vues schématiques, respectivement, d'un dispositif optique de séparation et d'un dispositif optique de recombinaison selon un mode de réalisation de l'invention ;

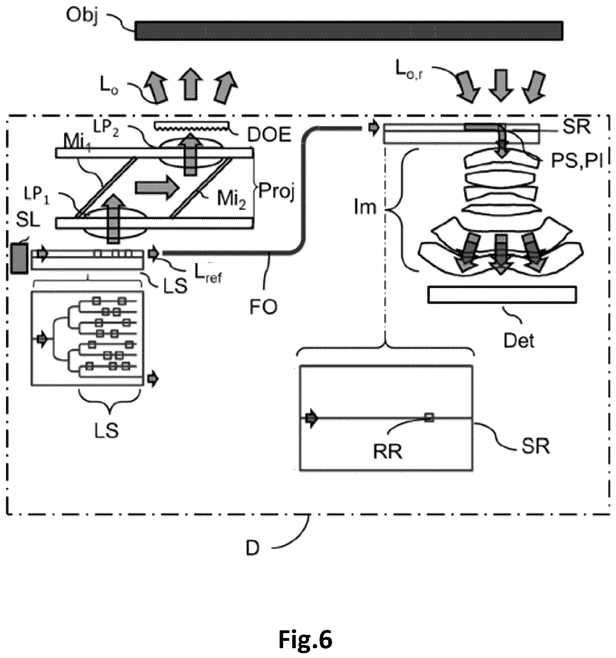

La figure 6 est une vue schématique d'un système d'imagerie selon un premier mode de réalisation de l'invention ;

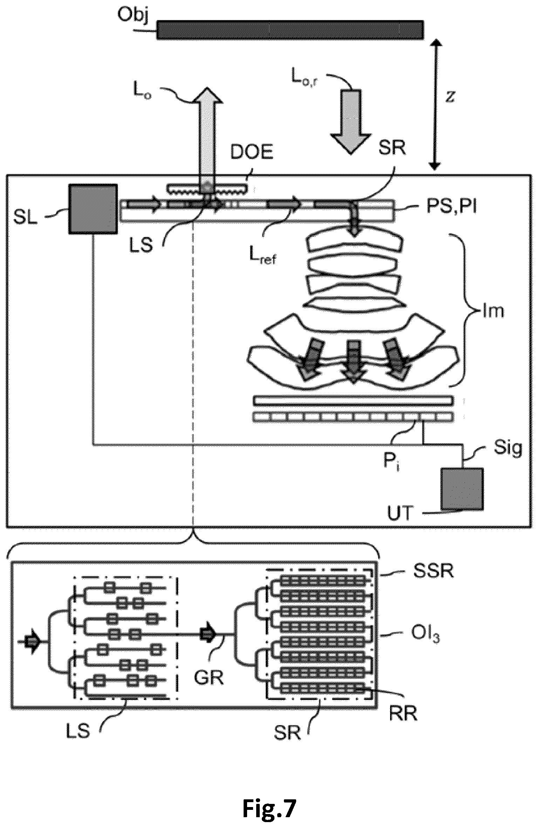

La figure 7 est une vue schématique d'un système d'imagerie selon un deuxième mode de réalisation de l'invention ;

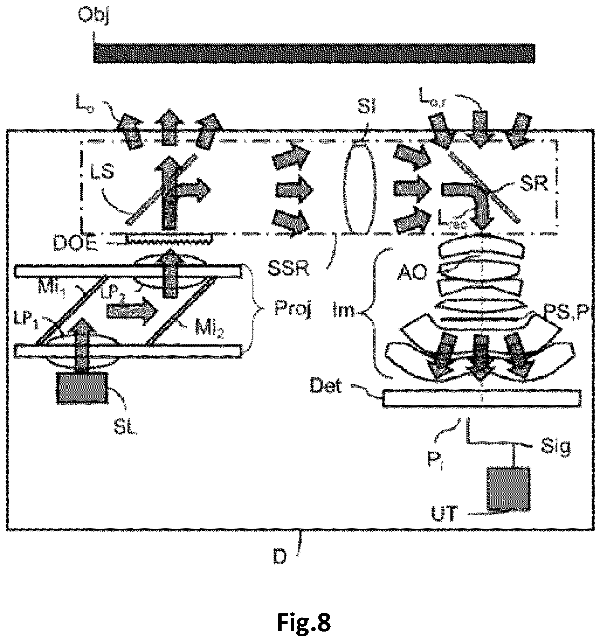

La figure 8 est une vue schématique d'un système d'imagerie selon une première variante de réalisation de l'invention ;

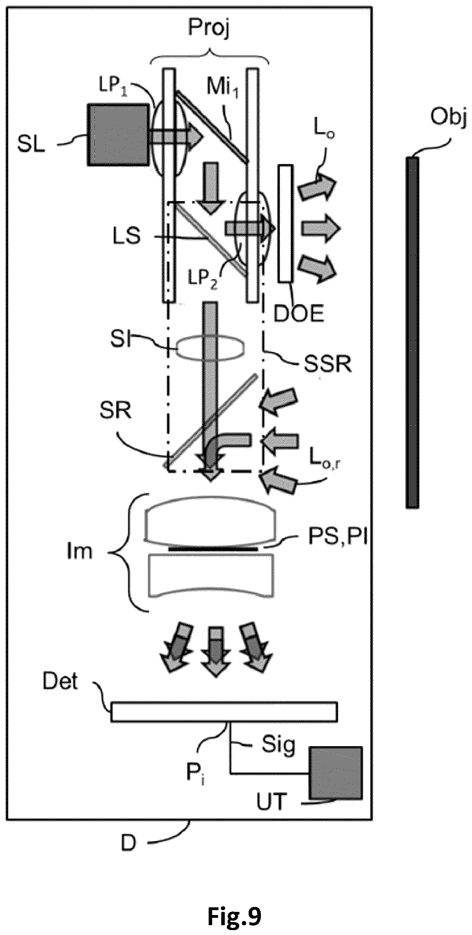

La figure 9 est une vue schématique d'un système d'imagerie selon une deuxième variante de réalisation de l'invention ;

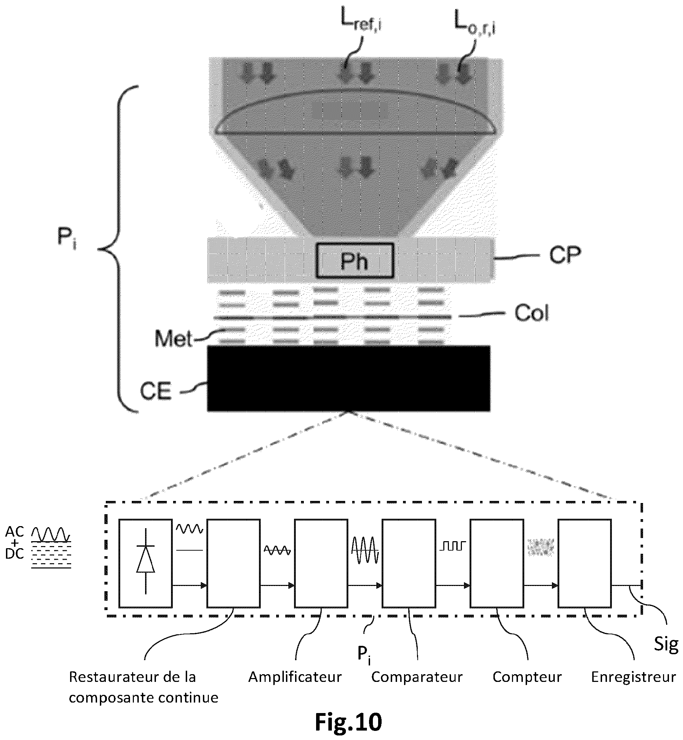

La figure 10 est une vue schématique d'un pixel du système d'imagerie selon un mode de réalisation de l'invention ;

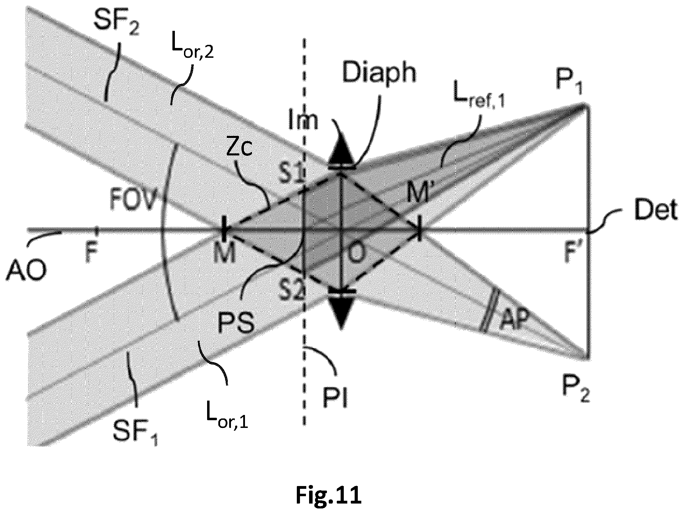

La figure 11 est une illustration du recouvrement du faisceau objet et du faisceau de référence sur des pixels du détecteur ;

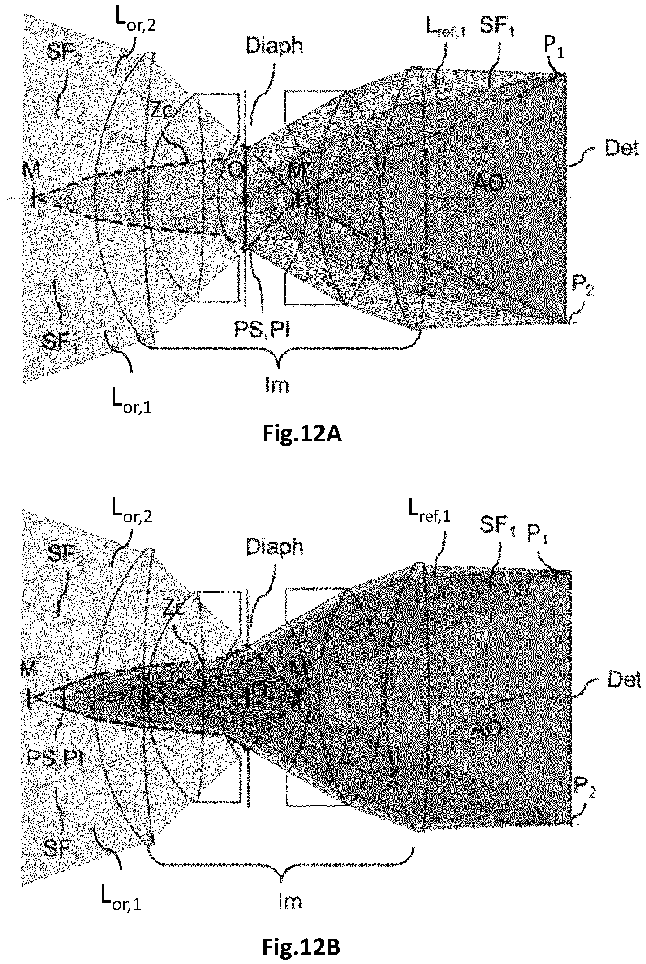

Les figures 12A et 12B sont une illustration du recouvrement du faisceau objet et du faisceau de référence sur le détecteur, pour un dispositif optique d'imagerie de type 'triple Gauss', dont le plan image intermédiaire est situé respectivement sur le plan du diaphragme d'ouverture et en amont du plan du diaphragme d'ouverture (ici avant le premier groupe de lentille du dispositif optique d'imagerie de type triple Gauss) ;

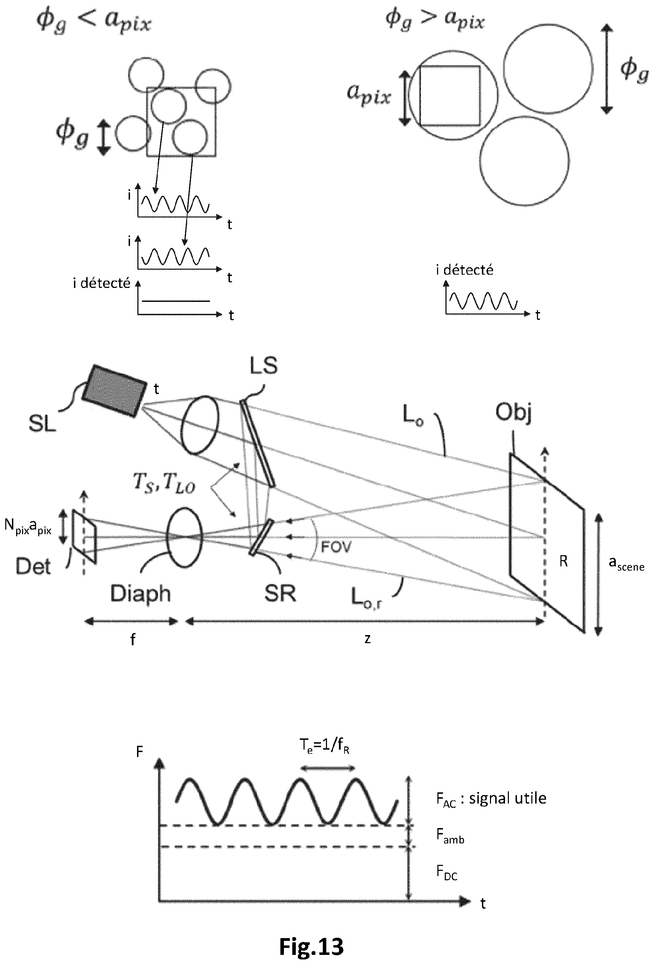

La figure 13 est une vue schématique d'un système d'imagerie selon un mode de réalisation de l'invention mettant en évidence l'impact sur l'intensité du signal hétérodyne détecté que peuvent avoir les grains de speckle en fonction de leur taille.

## DESCRIPTION DETAILLEE DE MODES DE REALISATION PARTICULIERS

Sur les figures et dans la suite de la description, les mêmes références représentent des éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres, et peuvent être combinés entre eux. Sauf indication contraire, les termes « sensiblement », « environ », « de l'ordre de » signifient à 10% près, et de préférence à 5% près. Par ailleurs, les termes « compris entre ... et ... » et équivalents signifient que les bornes sont incluses, sauf indication contraire.

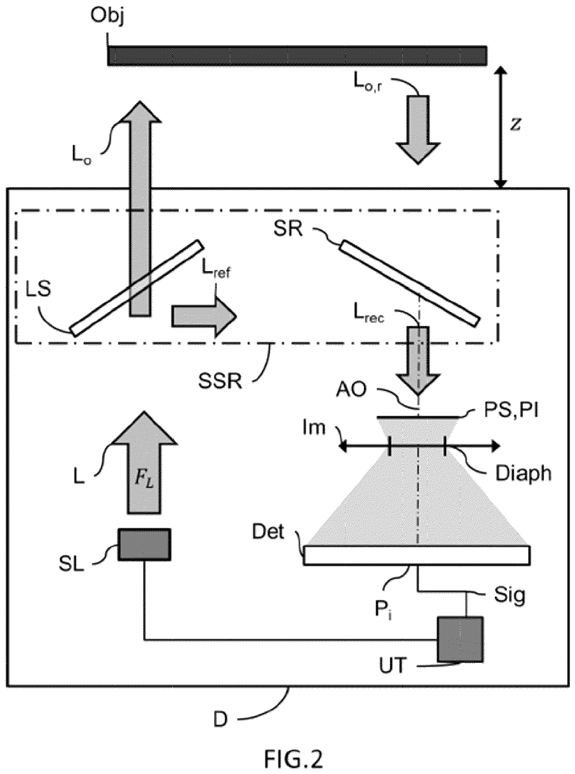

La figure 2 représente une vue schématique d'un système d'imagerie D LIDAR cohérent selon un mode de réalisation de l'invention. Le système d'imagerie D permet d'acquérir une image de distance instantanée d'une scène à éclairer/observer Obj en réalisant une interférence d'une voie objet (faisceau objet réfléchi $L_{or}$ par la scène) avec une voie de référence (faisceau de référence $L_{ref}$) sur une matrice de pixels à l'aide d'un dispositif optique d'imagerie Im réalisant une image de la scène.

Notons que le système d'imagerie D est dit « LIDAR » (acronyme de *Light Detection and Ranging,* en anglais) dans la mesure où il est adapté à fournir une cartographie de la distance (ou image de distance) d'une scène éclairée par un signal optique cohérent. Dans le cadre de l'invention, le système imageur éclaire toute la scène de manière instantanée par un signal optique continu, et acquiert simultanément l'image de la scène éclairée pour en déterminer la distance. Le système imageur selon l'invention se distingue ainsi des systèmes LIDAR (de type à mesure par temps de vol (TOF, pour *Time Of Flight,* en anglais) ou même de type FMCW), dans laquelle la scène est « scannée », i.e. balayée spatialement par un signal optique.

Notons également que le système d'imagerie D est dit à détection hétérodyne dans la mesure où, pour déterminer la distance de la scène éclairée, on détermine une fréquence dite de battement d'un signal hétérodyne (faisceau recombiné) formé par l'interférence entre un faisceau de référence d'un oscillateur local et un faisceau rétrodiffusé/réfléchi par la scène éclairée, ces deux faisceaux optiques étant cohérents entre eux. Le faisceau de référence et le faisceau projeté sur la scène sont en effet tous deux issus d'un même signal optique primaire (rayonnement laser L) émis par la source laser. La détection hétérodyne est de type FMCW dans la mesure où le signal primaire est un signal continu et modulé en fréquence.

L'imageur (détecteur Det) peut être de type *global shutter* où tous les pixels $P_i$ sont lus au même instant. Le système imageur peut alors fournir une image de distance instantanée. En variante, il peut être de type *rolling shutter,* et donc présenter une lecture séquentielle des pixels $P_i$, par exemple ligne par ligne, où tous les pixels $P_i$ d'une même ligne sont lus simultanément.

Le système d'imagerie D comprend une source laser SL configurée pour émettre un rayonnement laser L présentant une fréquence optique $F_L$ modulée temporellement. La source laser est configurée pour qu'une longueur de cohérence de la source soit deux fois supérieure, préférentiellement 10 fois supérieure à une distance prédéterminée maximale $z_{max}$ entre l'objet le plus éloigné de la scène et le système d'imagerie D. En effet, le système d'imagerie D étant un LIDAR cohérent, la longueur de cohérence $l_c$ de la source laser est supérieure à la différence de chemin optique entre la voie objet et la voie de référence - qui est approximativement la distance allerretour entre la scène à observer Obj et le système d'imagerie D, (moins le chemin optique du faisceau de référence entre la lame de séparation et la lame de recombinaison) - afin de réaliser une détection cohérente.

La voie de référence est le trajet suivi par le faisceau de référence $L_{ref}$ entre la source laser SL et le détecteur matriciel Det. La voie objet est le trajet aller suivi par le faisceau objet $L_o$ à partir de la source laser SL jusqu'à la scène, plus le trajet retour suivi par le faisceau objet réfléchi/rétrodiffusé $L_{or}$ par la scène jusqu'au détecteur matriciel Det.

Le rayonnement laser L émis par la source laser SL est un signal primaire, cohérent, continu et modulé en fréquence. Il est modulé en fréquence, par exemple ici de manière linéaire, à partir d'une fréquence de départ $f_0$ sur une période de répétition T avec une largeur de bande B. Le signal est ici un signal *chirpé,* c'est-à-dire une onde sinusoïdale dont la fréquence instantanée évolue linéairement au cours du temps.

La source laser SL peut être, dans le cas d'une émission dans le domaine du proche infrarouge (entre 0.7 et 2 $\mu$m), de type à cavité verticale émettant par la surface (VCSEL, pour *Vertical-Cavity Surface Emitting Laser,* en anglais) qui a généralement une longueur de cohérence de l'ordre du mètre, voire être du type à émission par la tranche (EEL, pour *Edge Emitting Laser,* en anglais) qui peut avoir une longueur de cohérence de l'ordre de la dizaine voire centaine de mètres.

Des éléments optiques passifs peuvent être situés sur le trajet optique du rayonnement laser L (signal primaire), entre la source laser SL et dispositif optique de séparation/recombinaison SSR. Ainsi, une lentille de mise en forme peut être située en sortie de la source laser SL, et permet de collimater le faisceau optique tout en en élargissant sa dimension latérale, par exemple à un diamètre de quelques millimètres. De plus, un dispositif de filtrage spatial peut être présent pour supprimer les hautes fréquences spatiales. Ainsi, le rayonnement laser L peut se propager de manière collimatée, avec un profil éventuellement gaussien et un diamètre de l'ordre de quelques millimètres, par exemple 5mm.

Le système d'imagerie D comprend un dispositif optique de séparation/recombinaison SSR comprenant au moins :

◦ un dispositif optique de séparation LS adapté à séparer spatialement le rayonnement laser L en deux voies : une voie de référence à laquelle est associée un faisceau de référence $L_{ref}$, et une voie objet à laquelle est associée un

faisceau objet $L_o$ dirigé vers la scène à éclairer Obj ;

∘ un dispositif optique de recombinaison SR adapté à superposer spatialement le faisceau de référence $L_{ref}$ à un faisceau objet réfléchi par la scène, dit faisceau objet réfléchi $L_{or}$, de manière à former un faisceau recombiné $L_{rec}$ (signal hétérodyne).

Selon un mode de réalisation de l'invention, le dispositif optique de séparation est configuré pour que la répartition de l'intensité du rayonnement lumineux du faisceau de référence $L_{ref}$ et du faisceau objet $L_o$ soit approximativement égale à 10%/90% (en sortie du dispositif optique de séparation LS). D'autres valeurs de ratio d'intensités peuvent être choisies pour optimiser les performances photométriques du système d'imagerie D, notamment suivant les caractéristiques de la scène (par exemple, réflexion lambertienne ou spéculaire) et du système d'imagerie D (par exemple les facteurs de séparation et de recombinaison du dispositif optique de séparation et de recombinaison).

Le système d'imagerie D est donc adapté à projeter une partie du rayonnement laser L en direction d'une scène qui est à éclairer de manière instantanée. Par « scène », on entend la scène éclairée par le faisceau objet $L_o$. Ainsi, toute la scène est éclairée instantanément par le faisceau objet $L_o$, qui présente donc une ouverture angulaire propre à éclairer toute la scène instantanément. De préférence, la scène est en outre éclairée uniformément, c'est-à-dire que le faisceau objet $L_o$ présente une intensité dont la distribution angulaire est constante.

Ainsi, dans le but d'éclairer la scène de manière instantanée et ici uniformément, le système d'imagerie D peut assurer une mise en forme du faisceau objet $L_o$. Pour cela, il peut comporter au moins un élément optique adapté à rendre divergent le faisceau objet $L_o$. L'ouverture angulaire du faisceau objet $L_o$ est telle que toute la scène est éclairée uniformément par le faisceau objet $L_o$. Elle est de préférence sensiblement égale à l'angle de champ du dispositif optique d'imagerie Im (par exemple égal à 20° environ). De plus, il peut comporter au moins un élément optique adapté à rendre la distribution angulaire de l'intensité constante, pour obtenir un profil plat de l'intensité, et non plus un profil gaussien. Bien entendu, les différents éléments optiques peuvent être distincts ou confondus.

Le système d'imagerie D comprend en outre un dispositif optique d'imagerie Im adapté à réaliser l'imagerie de la scène à observer Obj sur un détecteur Det en focalisant le faisceau objet réfléchi $L_{o,r}$. Le détecteur Det est placé approximativement dans le plan focal image du dispositif optique d'imagerie Im. Autrement dit, la scène éclairée et le plan de réception du détecteur matriciel Det sont conjugués, à la profondeur de champ près. Selon un mode de réalisation, le dispositif optique d'imagerie Im possède une focale largement inférieure à la distance typique entre la scène et le détecteur Det, afin que la scène soit considérée à l'infini du point de vue du dispositif d'optique d'imagerie Im. Le dispositif optique d'imagerie Im est un objectif comprenant un diaphragme d'ouverture Diaph définissant la pupille physique du système. Comme détaillé plus loin, il permet de réaliser une superposition spatiale cohérente du faisceau objet réfléchi $L_{or}$ avec le faisceau de référence $L_{ref}$ (correspondant à l'oscillateur local) sur le détecteur Det, améliorant ainsi la qualité du signal hétérodyne détecté. Notons que le dispositif optique d'imagerie Im permet l'utilisation d'une voie commune pour réaliser une image de la scène et pour faire interférer la voie objet et la voie de référence. Cela permet une plus grande compacité du système d'imagerie D par rapport aux lidars de l'art antérieur utilisant une recombinaison par guides d'onde.

Le dispositif optique d'imagerie Im présente des éléments optiques en espace libre, et comporte au moins une lentille et un diaphragme d'ouverture qui définit la pupille physique. Notons que le diaphragme d'ouverture peut ne pas être un objet physique distinct d'une lentille, mais peut être défini par le contour de la lentille. Le dispositif optique d'imagerie Im comporte un axe optique AO orthogonal au plan de réception du détecteur matriciel Det. Il est ici adapté à recevoir le faisceau objet réfléchi $L_{or}$ ainsi que le faisceau de référence $L_{ref}$, pour permettre leur transmission en direction du détecteur matriciel Det suivant un même axe optique AO et permettre ainsi une meilleure superposition des deux faisceaux optiques, améliorant ainsi la combinaison des deux faisceaux optiques par interférence, ce qui permet d'améliorer l'intensité du signal hétérodyne.

Selon un mode de réalisation, le dispositif optique d'imagerie Im est formé d'une lentille ou une pluralité de lentilles, par exemple un triple Gauss (cf. fig. 12A et 12B). Dans le cas où le dispositif optique d'imagerie Im comprend une pluralité de lentilles, le faisceau de référence $L_{ref}$ possède au moins une lentille du dispositif optique d'imagerie Im en commun avec le faisceau objet réfléchi $L_{or}$. De cette manière, le dispositif optique d'imagerie Im permet de réaliser la superposition cohérente du faisceau objet réfléchi $L_{or}$ avec le faisceau de référence $L_{ref}$ sur le détecteur Det.

Le système d'imagerie D est adapté à ce que tous les pixels $P_i$ du détecteur matriciel Det reçoivent le faisceau de référence $L_{ref}$. Ceci va de pair avec le fait que tous les pixels $P_i$ reçoivent également le signal objet réfléchi $L_{or}$. Aussi, le faisceau recombiné $L_{rec}$ (signal hétérodyne) se forme au niveau de chaque pixel $P_i$, de sorte qu'une image de distance pourra être déterminée à partir de toute la matrice de pixels $P_i$. A titre d'exemple, un diffuseur et éventuellement une lentille convergente peuvent mettre en forme le faisceau de référence $L_{ref}$ selon une ouverture angulaire prédéfinie. Ces éléments optiques sont alors disposés entre les dispositifs optiques LS et SR. L'ouverture angulaire est préalablement définie, en tenant compte des différents éléments optiques du dispositif optique d'imagerie Im, pour que le faisceau de référence $L_{ref}$ éclaire effectivement chaque pixel $P_i$. Notons que la lentille convergente n'est pas nécessaire entre les systèmes LS et SR, en aval du diffuseur : il suffit de positionner correctement le diffuseur sur le trajet du faisceau de référence $L_{ref}$, en tenant compte de son cône de diffusion, du diamètre du faisceau de référence $L_{ref}$ incident sur le diffuseur, de l'ouverture du dispositif optique d'imagerie Im et de la taille de la matrice de pixels $P_i$ du détecteur Det. En variante (configuration en optique guidée décrite plus loin), des réseaux de diffraction peuvent être dimensionnés de sorte que le faisceau de référence $L_{ref}$ présente une ouverture angulaire permettant d'éclairer tous les pixels $P_i$.

Le diffuseur situé entre les systèmes LS et SR et le plan de réception du détecteur matriciel Det ne sont pas conjugués, pour ainsi éviter que l'image du diffuseur ne se forme sur le détecteur matriciel Det, ce qui pourrait dégrader la qualité du signal hétérodyne à détecter. En revanche, le diffuseur peut être conjugué à un plan dit intermédiaire situé au niveau ou à proximité du diaphragme d'ouverture du dispositif optique d'imagerie Im, de manière à former une source lumineuse équivalente du faisceau de référence $L_{ref}$, comme expliqué en détail plus loin.

Le détecteur Det est un détecteur matriciel. Il comprend une matrice d'une pluralité de pixels $P_i$, avec i allant de 1 à n. Chacun des pixels $P_i$ comprend un photodétecteur Ph adapté à détecter une portion $L_{or,i}$ du faisceau objet réfléchi $L_{or}$, et une portion $L_{ref,i}$ du faisceau de référence $L_{ref}$, toutes les deux focalisées par le dispositif optique d'imagerie Im sur le pixel $P_i$. Le plan de réception du détecteur matriciel Det est situé dans un plan conjugué de la scène par le dispositif optique d'imagerie Im (à la profondeur de champ près). Autrement dit, l'image de la scène se forme dans le plan de réception du détecteur matriciel Det. Chaque pixel $P_i$ est destiné à recevoir le faisceau de référence $L_{ref}$ et le faisceau objet réfléchi $L_{or}$, lesquels interfèrent entre eux pour former un signal dit hétérodyne (faisceau recombiné $L_{rec}$). Le détecteur peut être de type CMOS ou CCD.

Notons que le signal hétérodyne comporte une composante constante $DC^{het}$ (destinée à être filtrée) et une composante alternative périodique $AC^{het}(t)$ qui forme le signal utile. Cette composante alternative présente une fréquence de battement ici égale à $B\tau/T$ et donc à $2BD/cT$, c étant la vitesse de la lumière. Ici $\tau$ est un retard entre le faisceau objet réfléchi $L_{or}$ et le faisceau de référence $L_{ref}$, B la bande passante et T la période de la modulation de fréquence du signal primaire (rayonnement laser L). La détermination de la fréquence de battement permet donc d'obtenir la distance entre la scène et le détecteur matriciel Det.

Les pixels $P_i$ peuvent être formés d'une microlentille disposée en regard d'une photodiode. Chaque pixel $P_i$ présente une dimension latérale $d_{px}$ définie par la taille des microlentilles, alors que la zone photosensible des photodiodes présente une dimension latérale $d_{pd}$. Ici, on considère que le plan de détection est le plan dans lequel s'étendent les microlentilles.

Chaque pixel $P_i$ du détecteur Det peut comprendre un circuit électronique de traitement CE adapté à calculer la fréquence $F_i$ de battement du signal hétérodyne, c'est-à-dire du faisceau recombiné $L_{rec}$ formé de l'interférence entre la portion du faisceau objet réfléchi détectée $L_{or,i}$ avec la portion du faisceau de référence détectée $L_{ref,i}$. Le calcul de la fréquence du battement est de préférence simultané pour tous les pixels $P_i$ du détecteur Det (voir plus loin). Cela permet de réaliser une image de distance instantanée de la scène (« *global shutter* ») sans avoir besoin de scanner la scène point par point.

Pour cela, chaque pixel $P_i$ peut comporter une photodiode, par exemple de type pn, pin ou à avalanche, et un dispositif de conversion optique/électrique de manière à convertir le signal hétérodyne détecté en un signal électrique, par exemple une tension électrique. Le dispositif de conversion peut comporter un filtre pour filtrer la composante continue $DC^{het}$ du signal hétérodyne détecté et ne garder que la composante alternative $AC^{het}$ ; un amplificateur de l'amplitude du signal hétérodyne filtré, un détecteur et compteur des variations périodiques du signal hétérodyne filtré, pour ainsi déterminer une valeur de la fréquence de battement du signal hétérodyne. La valeur de fréquence déterminée par chaque pixel $P_i$ peut ensuite être transmise à une unité de calcul qui en déduit une cartographie de distance. La fréquence de battement peut être déterminée de manière simultanée pour tous les pixels $P_i$, de manière à obtenir une cartographie de distance (image de distance) instantanée de la scène alors éclairée (approche de type *globalshutter*). Comme indiqué précédemment, le système imageur 1 peut également présenter un fonctionnement en mode *rolling shutter* et donc présenter une lecture séquentielle des pixels $P_i$, par exemple ligne par ligne, où tous les pixels $P_i$ d'une même ligne sont lus simultanément.

Ainsi, en fonctionnement, la source laser émet le signal primaire cohérent, continu et modulé en fréquence (rayonnement laser L), dont une partie (faisceau objet $L_o$) est projetée sur la scène pour l'éclairer de manière instantanée. Une partie (faisceau de référence $L_{ref}$) du signal primaire est transmis en direction du détecteur matriciel Det. Le dispositif optique d'imagerie Im reçoit le faisceau objet réfléchi $L_{or}$ et forme l'image de la scène éclairée sur la matrice de pixels $P_i$. Il reçoit ici également le faisceau de référence $L_{ref}$, qui est transmis en direction de la matrice de pixels $P_i$. Le faisceau de référence $L_{ref}$ et le faisceau objet réfléchi $L_{or}$ interfèrent et forment en chaque pixel $P_i$ un faisceau recombiné $L_{rec}$, c'est-à-dire le signal hétérodyne. Chacun des pixels $P_i$ détermine avantageusement la fréquence de battement $f_R$ du signal hétérodyne détecté, et la cartographie de distance de la scène éclairée est ensuite déterminée.

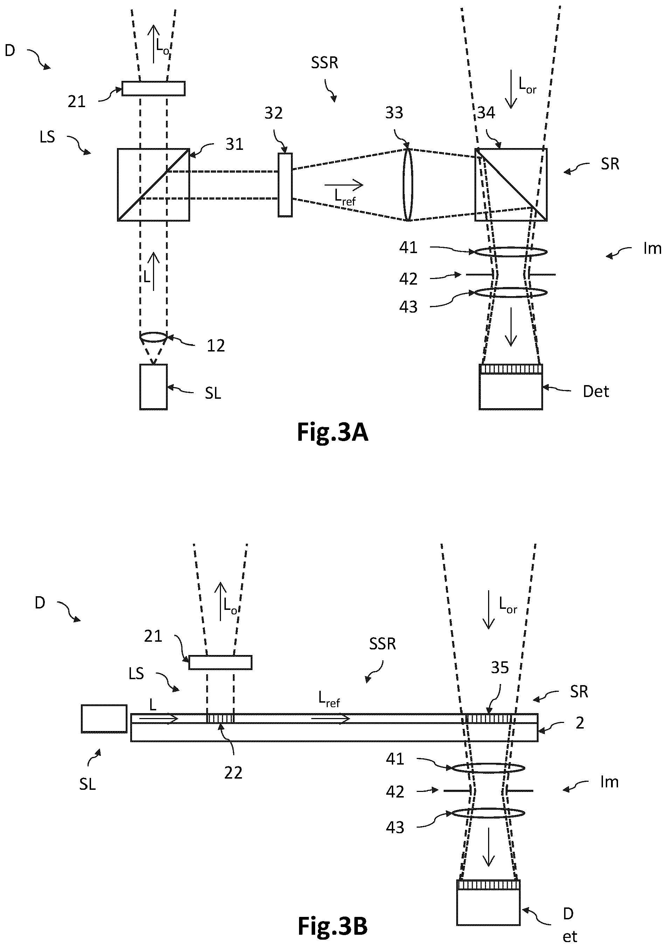

Les figures 3A et 3B sont des vues schématiques et partielles d'un système d'imagerie D LIDAR à détection hétérodyne de type FMCW, adapté à déterminer une image de distance d'une scène éclairée de manière instantanée par un signal optique continu et modulé en fréquence. Le système d'imagerie D présente ici une configuration en espace libre (fig.3A) ou une configuration en optique guidée (fig.3B). Il s'agit ici d'exemples donnés à titre illustratif, étant entendu que des combinaisons et variantes de ces configurations sont possibles.

Dans l'exemple de la fig.3A (optique en espace libre), le système d'imagerie D comporte une source laser SL et une lentille 12 de mise en forme permettant de collimater le faisceau optique tout en en élargissant sa dimension latérale. Le dispositif optique de séparation LS comporte une lame semi-réfléchissante ou un cube séparateur, ici un cube séparateur 31, qui transmet une partie du signal primaire (rayonnement laser L), qui devient le faisceau objet $L_o$, et réfléchit une partie du signal primaire, qui devient le faisceau de référence $L_{ref}$.

Un élément optique 21, ici un diffuseur en transmission, est ici disposé en aval du cube séparateur 31, et est adapté à rendre divergent le faisceau objet $L_o$. L'ouverture angulaire du faisceau objet $L_o$ est ici telle que toute la scène est éclairée uniformément par le faisceau objet $L_o$. Le profil d'intensité du faisceau objet $L_o$ passe d'un profil gaussien à un profil plat. De plus, le même diffuseur 21 rend ici divergent le faisceau objet $L_o$. Une lentille (non représentée) peut être située en aval du diffuseur (ou en amont de celui-ci) de sorte que l'ouverture angulaire présente une valeur prédéfinie, ici une valeur sensiblement égale à l'angle de champ du dispositif optique d'imagerie Im. Le dispositif optique de recombinaison SR comporte ici un cube combineur 34 assurant la transmission du faisceau de référence $L_{ref}$ et celle du faisceau objet réfléchi $L_{or}$ en direction du détecteur Det, suivant le même axe optique. Le dispositif optique d'imagerie Im comporte ici un ensemble de lentilles 41, 43 et un diaphragme d'ouverture 42 (qui définit la pupille physique) adaptés à faire l'image de la scène éclairée sur le plan de réception du détecteur Det.

Par ailleurs, le dispositif optique de séparation/recombinaison SSR comporte ici un diffuseur 32 et une lentille 33 situées entre le cube séparateur 31 et le cube combineur 34. Le diffuseur 32 est adapté à rendre constante la distribution angulaire de l'intensité, pour ainsi obtenir un profil plat de l'intensité du faisceau de référence $L_{ref}$, et non pas un profil gaussien. Le diffuseur 32 et la lentille 33 mettent en forme le faisceau de référence $L_{ref}$ selon une ouverture angulaire prédéfinie, en tenant compte des différents éléments optiques présents, pour que le faisceau de référence $L_{ref}$ éclaire effectivement tous les pixels du détecteur Det. Une telle lentille 33 n'est pas indispensable pour cela. Notons par ailleurs que le diffuseur 32 et le plan de détection ne sont pas conjugués, pour que l'image du diffuseur 32 ne se forme pas sur le détecter Det. Le dispositif optique de séparation/recombinaison SSR est en outre configuré pour former une image, dite intermédiaire PS, du faisceau de référence dans un plan perpendiculaire audit axe optique, dit plan image intermédiaire PI. Autrement dit, le diffuseur 32 est situé dans un plan conjugué avec le plan image intermédiaire PI, pour former l'image intermédiaire PS (source lumineuse équivalente), laquelle est située dans le segment [MM'] (et donc dans la zone centrale Zc) décrit plus loin.

Dans l'exemple de la fig.3B (optique guidée), le système d'imagerie D comporte un même substrat 2 fonctionnalisé. Ce dernier comporte un guide d'onde couplé à la source laser SL, qui s'étend jusqu'à une première matrice 22 de réseaux de diffraction (dispositif optique de séparation LS). Cette matrice 22 assure la projection du faisceau objet $L_o$ en direction de la scène. Le guide d'onde propage le faisceau de référence $L_{ref}$ jusqu'à une deuxième matrice 35 de réseaux de diffraction (dispositif optique de recombinaison SR) qui assure la projection du faisceau de référence $L_{ref}$ vers le détecteur Det, en passant par le dispositif optique d'imagerie Im. Ici, la deuxième matrice 35 et le substrat 2 sont transparents au faisceau objet réfléchi $L_{or}$, de sorte qu'il est transmis et superposé au faisceau de référence $L_{ref}$. Ici également, le dispositif optique de séparation/recombinaison SSR est configuré pour former l'image intermédiaire PS du faisceau de référence dans un plan image intermédiaire PI perpendiculaire audit axe optique. Autrement dit, la deuxième matrice de réseaux 35 est située dans un plan conjugué avec le plan image intermédiaire PI, pour former l'image intermédiaire PS (source lumineuse équivalente), laquelle est située dans le segment [MM'] (et donc dans la zone centrale Zc). Alternativement, la matrice de réseaux 35 est située dans le plan image intermédiaire PI et forme donc elle-même l'image intermédiaire PS (i.e. la source lumineuse équivalente du faisceau de référence $L_{ref}$).

Par ailleurs, les inventeurs ont constaté que les performances du système d'imagerie D sont optimisées lorsqu'on limite voire évite la présence de franges d'interférence produites par la superposition cohérente du faisceau objet réfléchi $L_{or}$ avec le faisceau de référence $L_{ref}$ au sein de chaque pixel $P_i$. En effet, de telles franges peuvent conduire à l'atténuation des oscillations résultantes du battement du signal hétérodyne, dans la mesure où les pixels $P_i$ intègrent indifféremment toutes les contributions. Pour limiter voire éviter l'apparition de ces franges, le système d'imagerie D selon l'invention est configuré pour que les fronts d'ondes des deux portions incidentes $L_{or,i}$ et $L_{ref,i}$ soient similaires ou identiques en chacun des pixels $P_i$. Cela permet de limiter ainsi la génération de franges d'interférence entre ces deux faisceaux optiques incidents.

Aussi, selon l'invention, le dispositif optique de séparation/recombinaison SSR est configuré pour former une image, dite intermédiaire PS, du faisceau de référence $L_{ref}$ dans un plan perpendiculaire à l'axe optique AO, dit plan image intermédiaire PI. De plus, la position du plan image intermédiaire PI sur l'axe optique AO est comprise dans un segment [MM'] de l'axe optique correspondant à la projection sur l'axe optique d'une zone d'intersection (appelée zone centrale Zc sur les fig.4A à 4D, 11 et 12A-12B) entre des sous-faisceaux du faisceau objet réfléchi $L_{or}$, lesdits sous-faisceaux étant des faisceaux de bord de champ de pleine lumière. Le fait de former une image du faisceau de référence $L_{ref}$ dans le plan image intermédiaire PI revient à former une source lumineuse équivalente (image intermédiaire PS) du faisceau de référence $L_{ref}$. La source lumineuse équivalente PS est donc située dans le segment [MM'], et est avantageusement contenue dans une zone centrale Zc des rayons du faisceau objet réfléchi $L_{or}$ de bord de champ de pleine lumière.

La source lumineuse équivalente PS présente en chaque point un angle d'émission du signal de référence au moins égal à l'angle de champ du dispositif optique d'imagerie Im, de sorte que chaque point de la source lumineuse équivalente PS (chaque point source) éclaire tous les pixels $P_i$. Par ailleurs, la source lumineuse équivalente PS peut avantageusement présenter une dimension latérale au moins égale à celle de la zone centrale Zc des rayons du signal objet rétrodiffusé de bord de champ de pleine lumière.

Les figures 4A à 4D illustrent une configuration du système d'imagerie D, dans laquelle on forme une source lumineuse équivalente PS du faisceau de référence $L_{ref}$ dans un plan intermédiaire PI situé au niveau ou à proximité du diaphragme d'ouverture Diaph. Sur ces figures sont représentés le plan de réception du détecteur matriciel Det, le dispositif optique d'imagerie Im (lentilles 41, 43 et diaphragme d'ouverture Diaph), et la source lumineuse équivalente PS du faisceau de référence $L_{ref}$.

Aussi, le dispositif optique de séparation/recombinaison SSR réalise l'image du faisceau de référence $L_{ref}$ dans le plan intermédiaire PI. Le diffuseur 32 (fig.3A) ou la matrice de réseaux 35 (fig.3B) est donc situé dans un plan qui est conjugué au plan intermédiaire PI (ou la matrice de réseaux 35 est elle-même située dans le plan intermédiaire PI). Le positionnement longitudinal de la source lumineuse équivalente PS suivant l'axe optique AO et sa dimension latérale peuvent être déterminés par les propriétés optiques et les dimensions du diffuseur 32 (fig.3A) ou de la matrice de réseaux 35 (fig.3B), et éventuellement par des éléments optiques additionnels de mise en forme. L'angle d'émission équivalent peut être déterminé par celui du diffuseur 32 (fig.3A) ou celui de la matrice de réseaux (fig.3B) (et par d'éventuels éléments optiques additionnels de mise en forme).

Le front d'onde du faisceau de référence $L_{ref}$ incident en chaque pixel $P_i$ est alors rendu plus proche, voire identique à celui du faisceau objet réfléchi $L_{or}$, en termes de forme et de direction principale. On limite ainsi la génération de franges d'interférence entre ces deux faisceaux optiques, ces franges d'interférence étant susceptibles d'entraîner une dégradation de la qualité du signal hétérodyne détecté. En d'autres termes, le matrice de pixels $P_i$ du détecteur Det fait office de diaphragme de champ.

On définit l'angle de champ FOV (*Field Of View,* en anglais) du dispositif optique d'imagerie Im comme étant l'angle dans lequel le détecteur matriciel Det est sensible au faisceau objet réfléchi $L_{or}$ au travers du dispositif optique d'imagerie Im. Il est défini ici comme étant l'angle, mesuré au centre de la pupille de sortie, entre deux rayons incidents du faisceau objet réfléchi $L_{or}$ passant par un même point central de la pupille de sortie et arrivant sur deux pixels d'extrémité opposés l'un à l'autre vis-à-vis de l'axe optique AO. Un pixel d'extrémité est un pixel $P_i$ situé en bordure de la matrice de pixels. Par ailleurs, la pupille de sortie est l'image du diaphragme d'ouverture par les lentilles situées en aval de ce dernier. Ici, le point central est situé dans le plan du diaphragme d'ouverture.

Ensuite, comme l'illustre plus précisément la fig.4B, on définit une zone centrale Zc d'intersection des rayons de bord de champ de pleine lumière (SF1 et SF2 indiqués sur les fig.11, 12A, 12B) (*unvignetted field,* en anglais, selon le terme utilisé dans l'ouvrage de J. E. Greivenkamp intitulé Field Guide to Geometrical Optics, SPIE Press, Bellingham, WA (2004)). Elle est définie ici comme étant la zone délimitée latéralement par l'intersection des rayons de bord de champ de pleine lumière, c'est-à-dire des rayons du faisceau objet réfléchi $L_{or}$ passant au niveau le contour du diaphragme d'ouverture Diaph et arrivant sur des pixels d'extrémité de la matrice de pixels. Ces pixels d'extrémité sont ceux situés sur la bordure de la matrice de pixels, c'est-à-dire les pixels les plus éloignés de l'axe optique AO. Cette zone centrale Zc prend la forme de deux cônes partageant la même base délimitée par le contour du diaphragme d'ouverture Diaph. Les sommets des cônes sont M et M', situés sur l'axe optique AO, respectivement en amont et en aval du diaphragme d'ouverture Diaph. Ils sont les points d'extrémités longitudinales de la zone centrale Zc.

La fig.4A illustre de manière détaillée et partielle, en coupe longitudinale, le dispositif optique d'imagerie Im et le plan de réception selon une variante de réalisation, dans laquelle la source lumineuse équivalente PS du faisceau de référence $L_{ref}$ est située dans la zone centrale Zc, ici en amont du diaphragme d'ouverture Diaph. La zone centrale Zc est illustrée plus précisément sur la fig.4B.

On représente, pour les deux pixels d'extrémité $Px_a$ et $Px_b$, d'une part les rayons de bord de champ de pleine lumière du faisceau objet réfléchi $L_{or}$ (en traits pleins), et d'autre part les rayons provenant de deux extrémités opposées de la source lumineuse équivalente PS et reçus par chacun des pixels d'extrémité (en traits pointillés).

Ainsi, pour ce qui concerne le pixel d'extrémité $Px_a$, il reçoit ici les deux rayons $L_{or1}{}^a$, $L_{or2}{}^a$ du faisceau objet réfléchi $L_{or}$ passant par la bordure du diaphragme d'ouverture Diaph (dans le plan longitudinal), ainsi que les deux rayons $L_{ref1}{}^a$, $L_{ref2}{}^a$ du faisceau de référence $L_{ref}$ provenant de la bordure de la source lumineuse équivalente PS (et bien entendu tous les rayons $L_{or}$ qui sont entre les rayons $L_{or1}{}^a$, $L_{or2}{}^a$, et tous les rayons $L_{ref}$ qui sont entre les rayons $L_{ref1}{}^a$, $L_{ref2}{}^a$). Les rayons $L_{or1}{}^a$ et $L_{ref1}{}^a$ passent tous les deux par la même bordure du diaphragme d'ouverture Diaph et sont donc superposés. En ce qui concerne les rayons reçus par le deuxième pixel d'extrémité $Px_b$, on ne les détaille pas dans la mesure où la situation est similaire.

le dispositif optique de séparation/recombinaison SSR est adapté de sorte que la source lumineuse équivalente PS présente, en chacun de ses points, un cône de divergence (ou d'émission équivalente) qui couvre toute la matrice de pixels $P_i$. Aussi, chacun des pixels $P_i$ reçoit effectivement le faisceau de référence $L_{ref}$ en plus du faisceau objet réfléchi $L_{or}$. Le signal hétérodyne se forme donc bien en chaque pixel $P_i$.

La source lumineuse équivalente PS étant positionnée entre les points M et M', et présentant une dimension latérale au moins égale à celle de la zone centrale Zc, le cône de réception du faisceau de référence $L_{ref}$ est sensiblement identique au cône de réception du faisceau objet réfléchi $L_{or}$, ceci en chaque pixel $P_i$.

La fig.4B est identique à la fig.4A à ceci près que les rayons du faisceau de référence $L_{ref}^a$ et $L_{ref}^b$ provenant de la source lumineuse équivalente PS ne sont pas représentés. On met ici en évidence la zone centrale Zc définie latéralement et longitudinalement par les rayons de bord de champ de pleine lumière $L_{or1}^a$, $L_{or2}^a$ et $L_{or1}^b$, $L_{or2}^b$ (ici dans un plan longitudinal). Le point M en amont du diaphragme d'ouverture Diaph est situé sur l'axe optique AO et est à l'intersection des rayons $L_{or1}^a$ et $L_{or2}^b$, alors que le point M' en aval du diaphragme d'ouverture Diaph est situé sur l'axe optique AO et est à l'intersection des rayons $L_{or2}^a$ et $L_{or1}^b$. La dimension latérale la plus importante de la zone centrale Zc est située dans le plan du diaphragme d'ouverture Diaph.

La fig.4C est identique à la fig.4A, à ceci près que l'on considère uniquement les rayons reçus par le pixel $Px_a$, à savoir les rayons compris entre les rayons $L_{or1}^a$ et $L_{or2}^a$ du faisceau objet réfléchi $L_{or}$, et les rayons compris entre les rayons $L_{ref1}^a$ et $L_{ref2}^a$ du faisceau de référence $L_{ref}$. Chaque point de cette source lumineuse équivalente PS éclaire au moins tout le plan de réception, et ici uniquement le plan de réception. Ainsi, un même pixel $P_i$ reçoit, en plus du faisceau objet réfléchi $L_{or}$, le faisceau de référence $L_{ref}$ provenant de tous les points de la source lumineuse équivalente PS.

On met ici en évidence le fait que l'on a réduit la différence entre les fronts d'onde de ces faisceaux optiques par rapport au cas où la source lumineuse équivalente PS serait située hors de la zone centrale Zc : on a réduit en particulier la valeur de l'angle d'écart $\theta_a$ entre les directions principales de ces fronts d'onde qui sont incidents sur le pixel $Px_a$. Une direction principale est définie comme étant la direction moyenne du cône angulaire du faisceau incident (faisceau de référence $L_{ref}$ ou faisceau objet réfléchi $L_{or}$) au niveau du pixel $P_i$ considéré, ici au niveau du pixel d'extrémité $Px_a$.

Ainsi, le fait de former une source lumineuse équivalente PS du faisceau de référence $L_{ref}$ dans la zone centrale Zc permet de réduire l'angle d'écart $\theta_i$ au niveau du pixel $P_i$ considéré. On augmente ainsi la dimension des interfranges qui peuvent se former entre le faisceau objet réfléchi $L_{or}$ et le faisceau de référence $L_{ref}$. La dimension des interfranges est, au premier ordre, de l'ordre de $\lambda/2\sin\theta_i$, où $\lambda$ est la longueur d'onde des signaux optiques incidents. Le fait d'avoir des cônes angulaires des faisceaux optiques (faisceau de référence $L_{ref}$ et faisceau objet réfléchi $L_{or}$) incidents en chaque pixel $P_i$ qui soient très similaires voire identiques entre eux permet également d'augmenter la dimension de l'interfrange.

Autrement dit, il est avantageux que, sur chaque pixel $P_i$, un axe de propagation de la portion $L_{or,i}$ du faisceau objet réfléchi $L_{or}$ soit colinéaire ou sensiblement colinéaire à un axe de propagation de la portion $L_{ref,i}$ du faisceau de référence $L_{ref}$. Dans le cas où les faisceaux objet réfléchi $L_{or}$ et de référence $L_{ref}$ sont approximativement des ondes planes au niveau de chaque pixel $P_i$ et si les directions de propagation de ces deux ondes font un angle $\theta$, le pas des franges sur le capteur étant alors de $\dfrac{\lambda}{2sin\theta}$ , la condition pour avoir moins d'un interfrange par pixel (teinte plate) se traduit par $\theta < \dfrac{\lambda}{2a_{pix}}$ avec $a_{pix}$ la taille de pixel, soit par exemple $\theta < 7°$ pour $\lambda = 1300nm$ et $a_{pix} = 5\mu m$. Comme indiqué plus loin, on tend ainsi à obtenir des franges d'interférence en « teinte plate ».

On améliore ainsi l'intensité détectée du signal hétérodyne. En effet, un angle d'écart $\theta_i$ important entre les directions principales des fronts d'onde et/ou un écart entre les cônes angulaires des faisceaux optiques incidents conduisent à réduire la taille des interfranges, qui peut alors être de l'ordre de la taille $d_{px}$ des pixels $P_i$, voire moins. Aussi, durant le temps d'acquisition des photodétecteurs, le fait que plusieurs franges d'interférence (zones brillantes et zones sombres) soient présentes à l'échelle de chaque pixel $P_i$ peut se traduire par une dégradation de la qualité de la détection du signal hétérodyne.

Il est particulièrement avantageux que la source lumineuse équivalente PS soit située au plus près du diaphragme d'ouverture Diaph, et que sa largeur soit au moins égale et de préférence sensiblement égale à celle de la zone centrale Zc, donc ici à celle de l'orifice du diaphragme d'ouverture Diaph.

A ce titre, la fig.4D illustre une variante de la configuration illustrée sur la fig.4C, dans laquelle la source lumineuse équivalente PS est située ici sensiblement dans le plan du diaphragme d'ouverture Diaph. On remarque que, au niveau du pixel $Px_a$, les rayons d'extrémité $L_{or1}^a$ et $L_{ref1}^a$ sont confondus, comme le sont les rayons $L_{or2}^a$ et $L_{ref2}^a$. Il en est de même pour les rayons qui définissent les directions principales de ces signaux. L'angle d'écart $\theta_a$ est alors sensiblement nul. De plus, comme la source lumineuse équivalente PS couvre sensiblement toute la surface du diaphragme d'ouverture Diaph, les cônes angulaires des deux faisceaux optiques incidents en chaque pixel sont sensiblement égaux. Aussi, les fronts d'onde du faisceau objet réfléchi $L_{or}$ et du faisceau de référence $L_{ref}$ sont sensiblement identiques. L'interfrange présente alors une dimension qui peut dépasser les dimensions de la matrice de pixels $P_i$, de sorte que l'on peut considérer qu'il n'y a alors pas de franges d'interférence entre ces faisceaux optiques susceptibles de dégrader la qualité du signal hétérodyne détecté par chaque pixel $P_i$. On parle alors de franges d'interférence « en teinte plate ».

Les performances du diapositif d'imagerie D sont alors encore améliorées.

Un processeur UT est relié au détecteur et à la source laser afin de déterminer la distance des points de la scène imagés sur les pixels et afin de construire une image de distance instantanée de la scène. Cette construction de la scène est réalisée à partir de la fréquence de battement $F_i$ calculée et associée à chaque pixel $P_i$ et à partir de la modulation de la fréquence optique du rayonnement laser. Par image de distance, on entend ici une cartographie de la distance des différents points de la scène observée correspondant chacun à un pixel différent.

Le système d'imagerie D peut ainsi déterminer une image de distance instantanée (ou « *global shutter* » en anglais) où tous les points de la scène sont mesurés simultanément avec un début et une fin de mesure identiques pour tous les pixels (à condition que le détecteur Det le permette). En outre, le système d'imagerie D ne nécessite pas de moyens de « *beam-steering* » pour scanner la scène à cadence rapide. Pour un fonctionnement à cadence vidéo, la durée de la mesure peut aller jusqu'à 20ms, ce qui relâche les contraintes à la fois sur la rapidité de l'imageur et la modulation de la fréquence optique à fournir par la source laser. A paramètres égaux par ailleurs, à la cadence vidéo, on obtient sur la voie objet le même flux de photons sur chacun des pixels de l'imageur FMCW que sur le photodétecteur de chaque pixel du système d'imagerie D (voir figure 13 et passages rattachés), mais avec l'avantage d'images non déformées pour des scènes en mouvement.

Ainsi, l'invention propose un système d'imagerie D active de distance, de grande résolution spatiale (nombre de points dans l'image donné par le nombre de pixels), robuste par rapport à la lumière parasite ambiante, éventuellement de type « *global shutter* » et pouvant fonctionner à cadence vidéo.

Selon un mode de réalisation, le système d'imagerie D comprend un filtre optique passe bande, placé devant le détecteur ou devant chaque pixel du détecteur destiné à la détection de la distance, par exemple en cas d'acquisition d'images de type RGB-z et centré sur la longueur d'onde d'émission du laser afin de filtrer une grande partie de la lumière parasite ambiante.

La source lumineuse équivalente (image intermédiaire) PS du faisceau de référence $L_{ref}$ est réalisée dans le plan intermédiaire PI selon différentes variantes. Selon une première variante, la source lumineuse équivalente PS est réalisée à l'aide de réseaux de diffraction dans un circuit d'optique intégré compris dans le dispositif optique de recombinaison générant une pluralité de « points source » dans le plan intermédiaire PI. Dans ce mode de réalisation, la source lumineuse équivalente PS est donc réelle. Selon une deuxième variante, la source lumineuse équivalente PS est réalisée à l'aide d'un dispositif optique intermédiaire, dans l'espace libre, réalisant l'image intermédiaire du faisceau de référence $L_{ref}$. La source lumineuse équivalente PS est ici l'image du faisceau de référence $L_{ref}$ focalisé par une lentille ou un groupe de lentille image. Dans ce mode de réalisation, la source lumineuse équivalente PS est généralement virtuelle.

La figure 5A présente un mode de réalisation de l'invention dans lequel le dispositif optique de séparation LS comprend un premier circuit d'optique intégrée $OI_1$ afin de réduire l'encombrement vertical du dispositif. Le rayonnement laser L est couplé dans un guide d'onde réalisé avec un matériau d'indice plus élevé que le substrat du circuit d'optique intégré. Le premier circuit optique intégré $OI_1$ comprend une pluralité de guides d'onde comprenant chacun au moins un réseau de diffraction, dit réseau objet réalisant la séparation des deux voies référence/objet. En effet, les réseaux objets sont adaptés de manière à extraire verticalement (ou plus généralement, extraire hors du plan du circuit OI1) une partie de la lumière du guide d'onde, formant le faisceau objet $L_o$, l'autre partie continuant sa propagation dans au moins un guide d'onde et formant le faisceau de référence $L_{ref}$. L'utilisation d'une pluralité de réseaux de diffraction permet d'améliorer l'uniformité ou d'ajuster le front d'onde du faisceau objet $L_o$, en respectant une condition de phase entre les différents réseaux afin de pouvoir former une superposition cohérente du faisceau de référence $L_{ref}$ et du faisceau objet réfléchi $L_{or}$ sur le détecteur Det. Cependant, selon un mode de réalisation, le premier circuit d'optique intégré $OI_1$ comprend un seul réseau de diffraction sur un seul guide d'onde.

Le dispositif optique de projection Proj peut être adapté à projeter la lumière sur la scène à éclairer dont on va ensuite former l'image sur le détecteur, par exemple une scène de forme rectangulaire. De préférence, le dispositif optique de projection Proj éclaire la scène selon un cône d'ouverture angulaire sensiblement égale à l'angle de champ du dispositif optique d'imagerie Im (qui est déterminé par sa distance focale et la taille de l'imageur). Ainsi, quelle que soit la distance de la scène, son image correspond à la taille de l'imageur.

De plus, le dispositif optique de projection Proj est préférentiellement adapté à éclairer la scène de façon uniforme, pour assurer par la suite un éclairement et un rapport signal sur bruit uniforme sur le détecteur, en particulier dans le cas où scène est lambertienne. Par sensiblement uniforme, on entend ici que l'écart-type de l'intensité lumineuse sur la scène est par exemple inférieur à 25% de la moyenne de l'intensité lumineuse. Selon un mode de réalisation, le dispositif optique de projection Proj comprend un dispositif optique classique à deux étages formé d'une première lentille de collimation $LP_1$, et d'une seconde lentille $LP_2$ qui fait l'image de la première lentille sur la scène (par exemple, la première lentille est approximativement au foyer objet de la seconde lentille $LP_2$ pour s'affranchir de l'image de la source sur la scène qui est quasiment à l'infini). La source laser SL est au foyer objet de la lentille de collimation $LP_1$. Dans ce mode de réalisation, l'ensemble de lentilles $LP_1$, $LP_2$ est replié pour réduire l'encombrement vertical du dispositif optique de projection Proj et comprend donc deux miroirs $Mi_1$, et $Mi_2$ disposés à 45°.

Dans ce mode de réalisation, le système d'imagerie D comprend en outre un dispositif optique de mise en forme DOE (*Diffractive Optical Element*) comportant des motifs périodiques, dont la période est de l'ordre de la longueur d'onde du rayonnement laser. Le dispositif optique DOE est disposé après le dispositif optique de projection Proj afin d'améliorer l'uniformité de l'éclairement de la scène. Alternativement, le dispositif optique DOE peut être omis et la mise en forme du faisceau peut être effectuée par le dispositif optique de projection Proj. Le dispositif optique de projection Proj et le dispositif optique de mise en forme DOE peuvent être utilisés seuls ou en combinaison dans tous les modes de réalisation de l'invention.

La figure 5B représente une vue schématique d'un dispositif optique de recombinaison SR selon un mode de réalisation l'invention. Dans ce mode de réalisation, le dispositif optique de recombinaison SR comprend un circuit d'optique intégré $OI_2$, dit deuxième circuit d'optique intégré, afin de réduire l'encombrement vertical du dispositif optique SR. Le faisceau de référence $L_{ref}$ est couplé dans le deuxième circuit d'optique intégré $OI_2$ au moyen d'un élément optique FO (non représenté). Le deuxième circuit d'optique intégré $OI_2$ comprend au moins un guide d'onde et au moins un réseau de diffraction dit réseau de référence RR permettant d'extraire la lumière en direction du détecteur Det au travers d'au moins une partie du dispositif optique d'imagerie Im. Le réseau de référence RR permet de générer l'équivalent d'un point source constituant l'image intermédiaire PS sur la voie de référence, à proximité du diaphragme d'ouverture du dispositif optique d'imagerie Im. Ainsi, le deuxième circuit d'optique intégré $OI_2$ est agencé dans ledit plan image intermédiaire PI de manière à ce que le réseau de référence RR forme l'image intermédiaire PS.

Le réseau de référence RR est ici un réseau de type *High Contrast Grating* (HCG), qui permet de découpler la lumière préférentiellement d'un seul côté du guide d'onde (sur la figure 5B, vers le dispositif optique d'imagerie Im). Les dimensions latérales du réseau de référence RR sont réduites (environ quelques longueurs d'onde du rayonnement laser L) pour permettre une divergence appropriée du faisceau de référence $L_{ref}$ issu du réseau de référence RR et un large éclairement de la pupille pour éclairer la totalité du détecteur Det. Le faisceau objet réfléchi $L_{or}$ n'est que peu affecté par l'insertion d'un guide d'onde et du réseau RR dans le trajet de la lumière. En effet, le contraste d'indices de réfraction des réseaux et des guides d'onde reste faible, et les réseaux de diffraction ne sont pas imagés sur le détecteur Det. Le guide d'onde n'est pas situé dans un plan conjugué du détecteur Det, et n'impacte donc pas la formation de l'image sur le détecteur Det. Dans le cas où on le positionne à l'intérieur du dispositif optique d'imagerie Im, le substrat sur lequel est réalisé le guide d'onde peut être inséré entre deux lentilles du dispositif optique d'imagerie Im, lorsque ce dernier comprend au moins deux lentilles.

Selon un mode de réalisation, le guide d'onde et le réseau RR du deuxième circuit d'optique intégré $OI_2$ sont réalisés sur une surface de la ou d'une des lentilles du dispositif optique d'imagerie Im. Les pertes par diffraction du flux sont alors faibles dans la mesure où le guide d'onde est de faible dimension latérale et n'est pas imagé sur le détecteur Det, et la surface du réseau RR est faible par rapport à la surface de la pupille.

Dans une variante de réalisation, le faisceau de référence $L_{ref}$ est recombiné avec le faisceau objet réfléchi $L_{or}$ par une pluralité de réseaux de diffraction de référence. Il existe alors une relation de phase entre les réseaux de référence afin qu'ils soient adaptés pour créer un front d'onde sur les pixels du détecteur Det dont la tangente en chaque point ne fait pas un angle supérieur à $\frac{\lambda}{2a_{pix}}$ par rapport à la tangente du front d'onde du faisceau objet réfléchi $L_{or}$. Pour cela, les guides du circuit $OI_2$ sont avantageusement monomodes. Selon un mode de réalisation, le circuit $OI_2$ comprend des déphaseurs actifs ou non dans les guides d'onde ou en sortie du réseau de référence. Chaque réseau de diffraction se comporte comme une source secondaire. Les réseaux sont disposés régulièrement pour former une matrice de lignes et colonnes, de préférence de même période. De manière préférentielle, la lumière diffractée par l'ensemble des réseaux forme des motifs lumineux régulièrement espacés dans le plan du détecteur Det, avec un motif par pixel. L'avantage d'avoir une pluralité de réseaux de référence est de pouvoir mieux répartir les motifs lumineux, mieux contrôler l'uniformité de l'éclairage du détecteur par les points sources secondaires et de mieux ajuster le front d'onde du faisceau de référence $L_{ref}$ par rapport au front d'onde du faisceau objet réfléchi $L_{or}$ sur le détecteur Det.

Alternativement, selon un autre mode de réalisation, le faisceau de référence $L_{ref}$ guidé est découplé en direction de l'espace libre vers le dispositif optique d'imagerie Im à l'aide d'une lame semi-réfléchissante comprise dans le guide d'onde et orientée ici à 45° de l'axe de propagation dans le guide d'onde. L'avantage du mode de réalisation avec un réseau est de réduire les pertes de flux sur la voie de référence par rapport au mode de réalisation avec une lame semi-réfléchissante.

Dans cet exemple, le dispositif optique de recombinaison SR permet de réduire l'épaisseur totale du système d'imagerie D puisqu'on remplace un composant micro-optique volumineux (par exemple une lame semi-réfléchissante dont l'encombrement vertical est approximativement égal au diamètre de la pupille d'entrée du dispositif optique d'imagerie Im) par un simple substrat d'épaisseur proche ou inférieure au millimètre.

La figure 6 illustre une vue schématique d'un système d'imagerie D selon un premier mode de réalisation de l'invention. Ce mode de réalisation combine le dispositif optique de séparation LS de la figure 5A et le dispositif optique de recombinaison SR de la figure 5B. Une fibre optique FO est adaptée pour guider le faisceau de référence $L_{ref}$ issu du premier circuit d'optique intégré $OI_1$ vers le deuxième circuit d'optique intégré $OI_2$. L'utilisation des deux circuits d'optiques intégrés $OI_1$, $OI_2$ permet de réduire l'encombrement vertical du système d'imagerie D. De plus, le système d'imagerie D comprend ici le dispositif optique de projection Proj et le dispositif optique de mise en forme DOE afin d'obtenir une illumination uniforme sur la scène. Selon un autre mode de réalisation, le deuxième circuit d'optique intégré $OI_2$ comprend une pluralité de réseaux de référence.

La figure 7 présente un système d'imagerie D selon un deuxième mode de réalisation de l'invention. Ce deuxième mode de réalisation est proche de celui de la figure 6, à l'exception que le premier circuit d'optique intégré $OI_1$ et le deuxième circuit d'optique intégré $OI_2$ ne forment plus qu'un seul circuit d'optique intégré $OI_3$ qui comprend alors le dispositif optique de séparation LS et ledit dispositif optique de recombinaison SR. Dans ce mode de réalisation, le dispositif optique de séparation/recombinaison comprend donc le circuit d'optique intégré $OI_3$ dans lequel le rayonnement laser L est couplé. Au moins un guide d'onde du circuit intégré dit guide d'onde référence GR guide le faisceau de référence $L_{ref}$ vers le dispositif optique de recombinaison SR comprenant au moins un réseau de référence RR, situé sur le guide d'onde de référence. Le circuit d'optique intégré $OI_3$ est agencé dans ledit plan image intermédiaire de manière à ce que le réseau de référence forme l'image intermédiaire PS. Le dispositif optique de recombinaison SR comprend ici une pluralité de réseaux de références. Alternativement, selon un autre mode de réalisation, le dispositif optique de recombinaison SR comprend un seul réseau de référence.

Ce mode de réalisation possède l'avantage d'éviter les pertes de flux provoquées par le couplage/découplage du faisceau de référence $L_{ref}$ dans la fibre optique FO du système d'imagerie D de la figure 6. De plus, cette disposition permet de réduire la complexité du système et son encombrement.

Dans les modes de réalisation des figures 5B, 6 et 7, le ou les réseaux de référence RR sont configurés pour que la divergence des points sources soit égale ou sensiblement égale à l'angle entre les sous-faisceaux SF1, SF2 (cf. fig.11) du faisceau objet réfléchi $L_{or}$ de bord de champ de pleine lumière du dispositif optique d'imagerie Im, dans l'espace où est situé le plan des points sources, c'est-à-dire dans le plan intermédiaire PI. Cette condition permet d'optimiser la photométrie du système.

La figure 8 présente une vue schématique d'un système d'imagerie D selon la deuxième variante de réalisation de l'invention. Dans cette deuxième variante, le dispositif optique de séparation/recombinaison SSR comprend en outre un dispositif optique intermédiaire SI, agencé après le dispositif optique de séparation LS, et avant le dispositif optique de recombinaison SR. Ce dispositif optique intermédiaire Si est adapté à focaliser le faisceau de référence $L_{ref}$ et à former l'image intermédiaire PS (source lumineuse équivalente) dans le plan intermédiaire PI. Selon un mode de réalisation, ce dispositif optique intermédiaire Si est une lentille ou un ensemble de lentilles. Plus précisément, le dispositif optique intermédiaire Si permet de mettre en forme le faisceau de référence $L_{ref}$ en le faisant converger vers le dispositif optique d'imagerie Im, de sorte que le faisceau de référence $L_{ref}$ éclaire l'intégralité du détecteur Det, et de manière à ce que les fronts d'onde des faisceaux objet réfléchi $L_{or}$ et de référence $L_{ref}$ au niveau de chaque pixel soient similaires voire identiques. Aussi, dans ce mode de réalisation, le dispositif optique de séparation LS et le dispositif optique de recombinaison SR peuvent être un cube séparateur ou une lame séparatrice. Par ailleurs, un assemblage similaire à celui du mode de réalisation de la figure 5A, formé d'un dispositif optique de projection Proj et d'un élément optique de mise en forme DOE, permet d'éclairer la scène de façon sensiblement uniforme.

Alternativement, selon un autre mode de réalisation de cette deuxième variante, l'ensemble formé par le dispositif optique de projection Proj et l'élément optique de mise en forme DOE est placé en aval du dispositif optique de séparation LS, sur le trajet du faisceau objet $L_o$.

La figure 9 illustre une vue schématique d'un système d'imagerie D selon un autre mode de réalisation de cette deuxième variante de l'invention. Ce mode de réalisation est identique à celui de la figure 8 à l'exception du fait qu'ici le dispositif optique d'imagerie Im est vertical et le détecteur Det est horizontal, afin de gagner en encombrement horizontal au niveau du système d'imagerie D complet. Cela permet notamment de positionner le dispositif optique de recombinaison SR entre les dispositifs optiques de projection Proj et d'imagerie Im. De plus, le dispositif optique de séparation LS peut ici être une lame séparatrice remplaçant le second miroir $Mi_2$ orienté ici à 45°, ce qui évite de devoir la positionner au-dessus du dispositif optique de projection Proj.

Alternativement, selon un autre mode de réalisation, la source laser SL est configurée pour émettre verticalement, pour gagner encore plus en encombrement horizontal. Le premier miroir $Mi_1$ du dispositif optique de projection Proj replié est alors supprimé et la source laser SL émet le rayonnement laser verticalement en direction du dispositif optique de séparation LS au travers de la lentille de collimation $LP_1$. Ce mode de réalisation est compatible avec une distance focale plus longue puisque l'épaisseur du dispositif optique d'imagerie Im n'est pas limitée par la largeur du système d'imagerie D. Ainsi, la résolution angulaire est plus grande, donnant accès à davantage de détails dans l'image (mais avec un champ de vision plus limité).

Le système d'imagerie D utilise la technique FMCW, et la source laser fonctionne donc en émission continue (*continuous wave* en anglais). La source laser SL peut ici être configurée pour que la fréquence optique soit modulée par une rampe linéaire périodique d'excursion B et de durée T. Dans ce mode de réalisation, le détecteur est une matrice de pixels spécialisés pour la détection hétérodyne FMCW avec photodétection et traitement du signal intégrés dans chaque pixel, qui fournit la fréquence des battements à l'issue du temps trame (20ms pour le temps trame de la cadence vidéo).

Comme l'illustre la figure 10, chaque pixel comprend avantageusement, en dessous d'une couche photodétectrice CP comprenant le photodétecteur Ph, une couche dite d'interconnexion BE dans un matériau diélectrique transparent au faisceau recombiné. La couche d'interconnexion BE comprend des interconnexions métalliques Met reliées au circuit électronique CE et au processeur UT.

La couche d'interconnexion BE est agencée d'un côté du photodétecteur Ph opposé à un côté détectant ladite portion $L_{or,i}$ du faisceau objet réfléchi $L_{or}$ et la portion $L_{ref,i}$ du faisceau de référence $L_{ref}$ (configuration BSI pour *back-side illumination*). Le circuit électronique associé au pixel $P_i$ est configuré pour collecter le signal de photoélectron généré dans le photodétecteur Ph et représentatif du battement, pour le convertir en tension puis pour :

- substituer une composante DC du signal hétérodyne représentatif du battement par une valeur de tension fixe prédéterminée (et de la valeur moyenne du courant d'obscurité), et générer un signal électrique dit signal substitué ; puis
- amplifier ledit signal substitué, et générer ainsi un signal dit amplifié ;
- détecter, à l'aide d'un comparateur, des pics, ou des fronts montants ou descendants du signal amplifié ;
- procéder à un comptage Sig du nombre N de périodes $T_e$ détectées dans le signal amplifié.

Différentes techniques de détection de pics peuvent être mises en oeuvre comme par exemple, par exemple une comparaison par rapport à un niveau prédéterminé, ou une comparaison d'un échantillon avec ses deux plus proches voisins, cette méthode étant plus robuste par rapport aux bruits basse fréquence.

Les interconnexions métalliques transmettent au processeur un signal représentatif du comptage du nombre de périodes détectées. Le processeur est alors configuré pour déterminer la distance z d'un point de la scène associé au pixel $P_i$ en calculant le nombre N de périodes $T_e$ détectées pendant la durée T de la modulation de la fréquence optique à partir du signal représentatif du comptage. En effet, comme expliqué précédemment, pour une rampe linéaire, la fréquence des oscillations est $f_R = \dfrac{2Bz}{cT}$. Le nombre N ($N \approx Tf_R$, avec $f_R = 1/T_e$) de périodes mesurées pendant la durée T permet de calculer la distance d'un point de la scène $z = Nc/2B$. La résolution en distance est $\delta z \approx \dfrac{c}{2B}$.

Le pixel $P_i$ détecte ainsi le signal hétérodyne sinusoïdal représentatif du battement dont la durée est le temps trame de la sinusoïde de plus haute fréquence $F_{R,max}$ correspondant à la fréquence du battement associé à un objet de la scène situé à la distance prédéterminée maximale $z_{max}$, telle que : $F_{R,max} = 2Bz_{max}/cT$, avec c la vitesse de la lumière dans le vide.

Afin d'éviter le sous-échantillonnage, selon le théorème de Shannon, la fréquence d'échantillonnage du pixel $P_i$ est supérieure à deux fois, préférentiellement trois fois la fréquence $F_{R,max}$. Le couplage optique dans le photodétecteur présent dans chaque pixel $P_i$ est essentiellement vertical, c'est-à-dire que la lumière des voies référence et objet se propage dans l'épaisseur de la couche photodétectrice CP.

Le flux de données en sortie du détecteur Det peut être similaire à celui d'un capteur d'image standard fonctionnant à cadence vidéo, l'information d'illumination étant remplacée par l'information de fréquence.

Selon un mode de réalisation, la lumière incidente sur le pixel $P_i$ est focalisée sur le photodétecteur par une microlentille ML si le facteur de remplissage du pixel $P_i$ est inférieur à 1. Un tel facteur peut être souhaitable afin d'éviter le *crosstalk* (étalement de la lumière) entre pixels adjacents du détecteur Det. Dans ce cas, des éléments sont agencés dans la couche photodétectrice CP, entre chaque pixel $P_i$, afin d'individualiser des zones de la couche photodétectrice. Les microlentilles peuvent être jointives, accolées à une surface de la matrice de pixel et adaptées pour optimiser une collection du faisceau objet réfléchi $L_{or}$ et du faisceau de référence $L_{ref}$ sur les pixels.

Selon un mode de réalisation, la source laser SL est un laser à émission par la tranche (EEL pour *edge emitting laser* en anglais), ou une diode laser à cavité verticale émettant par la surface (VCSEL pour *vertical-cavity surface-emitting laser* en anglais) et le photodétecteur est une photodiode ou une photodiode à avalanche. Alternativement, selon un autre mode de réalisation, la source laser est un laser à cascade quantique (QCL) et le photodétecteur est une matrice de bolomètres ou un photodétecteur infrarouge de type tellurure de mercure-cadmium (MCT). Les lasers EEL ou VCSEL sont préférentiellement utilisés pour une émission laser à une longueur d'onde inférieure à $3\mu m$, et les QCLs sont préférentiellement utilisés pour une émission laser à une longueur d'onde supérieure à $3\mu m$.

Le tableau suivant présente, à titre non limitatif, différentes technologies adaptées à la réalisation du système d'imagerie D des différents modes de réalisation de l'invention :

| Longueur d'onde | 850nm, 940nm | 1.3-1.55$\mu$m | 3-5$\mu$m | 8-14$\mu$m |
|---|---|---|---|---|
| Source laser SL | EEL AsGa | EEL InP | QCL | QCL |
| Optique espace libre | Verre/Plastique | Verre | Ge ou Si | Ge ou Si |
| Optique intégrée | SiN ou verre | Si ou SiO$_2$ | Si ou SiO$_2$ | Ge ou Si |
| Filtre optique | Passe-bande aSi/SiO$_2$ | Passe-bande aSi/SiO$_2$ | Passe-bande aSi/SiO$_2$ | Passe-bande aSi/SiO$_2$ |
| Photodétecteur Ph | Photodiode Si | Photodiode InGaAs ou Ge | Photodiode à avalanche ou MCT refroidi | Microbolomètre |

Par optique en espace libre, on entend la propagation d'un faisceau optique au travers de lentilles, lames et cubes séparateurs. Par optique intégrée, on entend la propagation d'un faisceau optique par des guides d'onde, et des réseaux de diffraction des circuits d'optique intégrée.

La figure 11 présente une illustration du recouvrement du faisceau objet réfléchi $L_{or}$ par le faisceau de référence $L_{ref}$ sur le détecteur Det, dans un mode de réalisation du système d'imagerie D. Par souci de clarté, le dispositif optique d'imagerie Im est une lentille mince, avec un diaphragme d'ouverture Diaph situé sur cette lentille. Cette figure est similaire à la fig.4B.

On considère deux pixels $P_1$ et $P_2$ du détecteur Det en bord de champ. Il s'agit de pixels d'extrémité, dans le sens où ils sont situés en bordure de la matrice de pixels. On définit les sous faisceaux $SF_1$ et $SF_2$ comme les faisceaux de bord de champ du faisceau objet réfléchi $L_{or}$ illuminant respectivement le pixel $P_1$ et le pixel $P_2$ du détecteur. Le dispositif optique de séparation/recombinaison SSR est configuré de sorte que les positions longitudinale (c'est-à-dire celle du plan image intermédiaire PI) et latérale de l'image intermédiaire PS par rapport à l'axe optique conduisent à ce que la direction des rayons du faisceau de référence $L_{ref}$ tendent le mieux possible vers celle des rayons du faisceau objet réfléchi $L_{or}$.

Le sous-faisceau $SF_1$ (également appelé $L_{or,1}$) est la portion du faisceau objet réfléchi $L_{or}$ qui illumine le pixel P1. C'est un sous-faisceau parallèle et incliné par rapport à l'axe optique, issu d'un point source de la scène considéré situé par exemple à l'infini du point de vue du dispositif optique d'imagerie !m.

Le sous faisceau $L_{ref,1}$ est la portion du faisceau de référence $L_{ref}$ qui parvient au pixel considéré $P_1$. Chaque rayon de ce sous-faisceau est issu d'un point source différent. Dans l'espace objet du dispositif optique d'imagerie Im, ces rayons sont parallèles au sous-faisceau incliné du faisceau objet réfléchi $L_{or}$ puisqu'ils traversent le même dispositif optique d'imagerie Im.

Aussi, la position longitudinale de l'image intermédiaire PS sur l'axe optique AO est donc comprise dans le segment [MM']. Le segment [MM'] a été défini plus haut en lien avec les fig.4A à 4D. Le faisceau de référence $L_{ref}$ issu du dispositif optique de séparation/recombinaison SSR a au moins une lentille du dispositif optique d'imagerie Im en commun avec le faisceau objet réfléchi $L_{or}$ afin que ces deux faisceaux puissent être superposés sur le détecteur Det. Plus précisément, le segment [MM'] correspond à la projection sur l'axe optique de la zone centrale Zc des deux sous-faisceaux $SF_1$, $SF_2$ du faisceau objet réfléchi de bord de champ de pleine lumière. Ici, le plan image intermédiaire PI est situé en amont du diaphragme d'ouverture Diaph du dispositif optique d'imagerie !m.

Des points sources de l'image intermédiaire PS (source lumineuse équivalente) qui seraient placés dans le plan intermédiaire PI mais au-delà, de part et d'autre du segment [S1S2] n'éclaireraient que partiellement le détecteur Det. De même, les points sources d'une image intermédiaire qui serait située trop en amont du point M sur l'axe optique AO n'éclaireraient que partiellement le détecteur Det.

La dimension latérale de l'image intermédiaire PS du point de vue de la photométrie (pour limiter les pertes sur la voie de référence) est avantageusement inférieure ou égale à la dimension latérale de l'intersection des sous-faisceaux $SF_1$, $SF_2$, au plan image intermédiaire PI. Une dimension avantageuse est représentée par le segment [S1S2].

Le recouvrement des spectres angulaires du faisceau objet réfléchi $L_{or}$ et du faisceau de référence $L_{ref}$ sur un pixel donné est plus important si l'ouverture AP du dispositif optique d'imagerie Im est faible par rapport à son angle de champ de la voie objet réfléchi FOV, cet angle de champ étant égal à la divergence du faisceau objet réfléchi $L_{or}$. Ces deux spectres angulaires sont centrés pour le pixel du détecteur Det situé sur l'axe optique AO.

Si le plan image intermédiaire PI est situé dans le plan de la lentille mince avec un diamètre égal à la pupille, les fronts d'onde des faisceaux objet réfléchi $L_{or}$ et de référence $L_{ref}$ sont confondus. Comme indiqué plus haut, la qualité du signal hétérodyne détecté est alors fortement améliorée.

Selon un mode de réalisation de l'invention, le dispositif optique de séparation/recombinaison SSR est configuré de sorte qu'une divergence du faisceau de référence $L_{ref}$ issu du dispositif optique de séparation/recombinaison SSR est égale à l'angle formé par lesdits sous-faisceaux $SF_1$, $SF_2$ au plan image intermédiaire PI. Ainsi, le faisceau de référence $L_{ref}$ issu du dispositif optique de séparation/recombinaison SSR éclaire l'intégralité des pixels du détecteur Det. Le dispositif optique de recombinaison SR est configuré pour que le ou les réseaux de référence forment des points sources avec une divergence égale à l'angle de champ du faisceau objet réfléchi $L_{or}$ au plan image intermédiaire PI.

Selon l'invention, le dispositif optique de séparation/recombinaison SSR est configuré pour que le plan image intermédiaire PI soit situé à proximité ou confondu avec un plan comprenant une pupille ou un diaphragme d'ouverture Diaph du dispositif optique d'imagerie Im, pour améliorer l'uniformité de l'éclairage sur le détecteur mais également améliorer la qualité du signal hétérodyne détecté.

Selon un mode de réalisation, le plan intermédiaire PI est confondu avec un plan comprenant une pupille ou un diaphragme d'ouverture Diaph du dispositif optique d'imagerie lm. Ce mode de réalisation permet de minimiser l'angle moyen du front d'onde du faisceau objet réfléchi $L_{or}$ et celui du front d'onde du faisceau de référence $L_{ref}$ sur chaque pixel. Ainsi, l'écart angulaire entre le faisceau objet réfléchi $L_{or}$ et le faisceau de référence $L_{ref}$ sur chaque pixel est suffisament faible pour générer des franges en teinte plate. Par « teinte plate », on entend ici qu'il n'existe pas de frange visible sur les pixels. Autrement dit, l'interfrange est grand par rapport à la taille des pixels (ici à la taille des microlentilles).

Le plan image intermédiaire PI peut toutefois être situé en amont du dispositif optique d'imagerie Im et de sa pupille. Cette position permet une plus grande accessibilité de l'image intermédiaire PI, ce qui peut être avantageux dans le cas d'une configuration en optique guidée du système d'imagerie D (cf. fig. 5B, 6 et 7).

Le plan image intermédiaire PI peut également être situé en aval de la pupille du dispositif optique d'imagerie Im, tout en gardant au moins une lentille du dispositif optique d'imagerie Im en commun entre le faisceau objet réfléchi $L_{or}$ et le faisceau de référence $L_{ref}$, afin manière à générer une source lumineuse équivalente PI (ici virtuelle).

Les figures 12A et 12B illustrent un exemple de recouvrement du faisceau objet réfléchi $L_{or}$ et du faisceau de référence $L_{ref}$ sur le détecteur Det, pour un dispositif optique d'imagerie Im de type triple Gauss. Le plan image intermédiaire PI est situé respectivement sur le plan du diaphragme d'ouverture Diaph et avant du premier groupe de lentilles du dispositif optique d'imagerie lm. Il est entendu que le dispositif optique d'imagerie Im n'est pas limité à un triple Gauss mais peut être tout autre objectif connu de l'homme de l'art.

Les deux sous-faisceaux $SF_1$ et $SF_2$ ($L_{or,1}$, $L_{or,2}$) sont ici les faisceaux en bord de champ de pleine lumière du faisceau objet réfléchi $L_{or}$, illuminant respectivement les pixel $P_1$ et $P_2$ du détecteur Det. La dimension latérale de l'image intermédiaire PI est donnée par le segment [S1S2], c'est-à-dire la dimension latérale de l'intersection des sous-faisceaux $SF_1$, $SF_2$, au plan image intermédiaire PI. Des cônes d'émission de divergence similaire de 3 points sources sont illustrés à titre d'exemple. Est également représenté le sous faisceau $L_{ref,1}$ qui est la portion du faisceau de référence $L_{ref}$ qui parvient au pixel considéré $P_1$. Comme mentionné précédemment, la configuration de la figure 12B est avantageuse d'un point de vue de l'accessibilité structurelle du plan image intermédiaire PI (en particulier dans la configuration en optique guidée), alors que la configuration de la figure 12A est plus optimale pour assurer l'obtention d'interférences en teinte plate sur la matrice de pixels. En effet, l'écart angulaire entre le faisceau de référence $L_{ref,1}$ et le sous-faisceau $SF_1$ du faisceau objet réfléchi $L_{or,1}$ est plus faible dans la configuration 12A que dans la configuration 12B.

La figure 13 représente différents éléments du système d'imagerie D selon un mode de réalisation, et met en évidence l'effet des grains de speckle sur la détection du signal hétérodyne. La scène Obj observée présente toujours en pratique un certain degré de rugosité. Le système d'imagerie D relevant de l'imagerie cohérente, il se forme donc une figure de speckle (granulation laser) dans le plan focal image du détecteur Det. La taille caractéristique des grains de speckle peut alors impacter la qualité de la mesure du signal hétérodyne détecté. La phase du faisceau objet réfléchi est sensiblement constante à l'intérieur d'un grain de speckle, mais est aléatoire entre les différents grains de speckle. Ainsi, les oscillations du signal hétérodyne générées par interférence entre le faisceau objet réfléchi et le faisceau de référence sont à la même fréquence pour des grains de speckle voisins, mais sont déphasées aléatoirement entre les grains de speckle.

Aussi, si plusieurs grains de speckle sont présents dans un seul pixel, la photodiode qui intègre indifféremment toutes les contributions va fournir un signal moyenné avec une composante AC affaiblie, voire même supprimée (par exemple dans le cas de deux grains de speckle en opposition de phase : cf. fig. 11 : cas $\phi_g < a_{pix}$). Ici, $\phi_g$ est la taille moyenne d'un grain de speckle dans le plan du détecteur Det, et $a_{pix}$ est la taille latérale d'un pixel (par ex. ici d'une microlentille située au-dessus d'une photodiode). A l'inverse, dans le cas où le diamètre $\phi_g$ des grains de speckle est supérieur à la taille $a_{pix}$ du photodétecteur (cf. fig. 11 : cas $\phi_g > a_{pix}$), le contraste des oscillations est plus important, et donc plus favorable à une bonne détection du signal hétérodyne.

Aussi, dans un mode de réalisation de l'invention, la surface (ou la taille) du photodétecteur est inférieure à la surface (ou la taille moyenne) des grains du speckle. La taille moyenne $\phi_g$ de grain du speckle dans l'image d'un objet diffuseur a une moyenne statistique de $2 \times \lambda \times f_{\#}$, où $\lambda$ est la longueur d'onde de la source laser, et $f_{\#}$ est le nombre d'ouverture du dispositif optique d'imagerie lm. Ainsi, dans ce mode de réalisation de l'invention l'ouverture numérique du dispositif optique d'imagerie Im est adaptée de sorte que la taille moyenne $\phi_g$ des grains de speckle sur le détecteur Det est supérieure à une dimension caractéristique $a_{pix}$ du photodétecteur de chaque pixel du détecteur. Par dimension caractéristique, on entend par exemple le côté d'un photodétecteur carré (ici le côté de la microlentille associée).

Le passage suivant décrit les paramètres et les performances typiques du système d'imagerie D selon un mode de réalisation de l'invention. La valeur des paramètres utilisée n'est pas limitative et est donnée à titre d'exemple.

Dans cet exemple, on suppose que la distance prédéterminée maximale de la scène par rapport au détecteur Det est z = 10m. On suppose que la résolution en distance souhaitée est de 5cm, ce qui fixe l'excursion de la fréquence optique du laser à $B \approx \frac{c}{2\delta}$ ~3GHz .

Afin de travailler en cadence vidéo, on souhaite réaliser une image de distance de la scène en 1/50Hz=20ms au maximum. La durée T de la rampe de fréquence optique de la source est donc 20ms. Alternativement, la durée T de la rampe peut être un sous-multiple de 20ms, pour pouvoir faire plusieurs rampes dans cette durée T, établir une statistique de mesures et ainsi améliorer la précision des mesures. Cependant, cela n'est possible que si le signal et le rapport signal sur bruit sont suffisants.

La pente de la rampe est 0.15MHz/μs, qui est une valeur facilement accessible par modulation du courant d'injection d'un laser à semi-conducteur. La fréquence des oscillations qui seront détectées par les pixels du détecteur est $f_R = \frac{2Bz}{cT}$ ~10kHz : la période de ces oscillations $1/f_R \approx 100$μs.

Dans le cas d'un champ de vision FOV de 26x19° (32° en diagonale) et un dispositif optique d'imagerie Im de f = 7mm de distance focale, la taille minimale du détecteur Det est alors égale à $2 \times f \times \tan(FOV/2) = 3.2 \times 2.4$mm. Pour un format VGA (640x480 pixels), la taille de pixel est alors de $5 \times 5$μm.

Dans le cas d'une longueur d'onde λ du laser de 1300nm (avec, par exemple, un détecteur en germanium ou InGaAs), le nombre d'ouverture $f_\#$ du dispositif optique d'imagerie Im est de préférence supérieur à 1.9, pour ainsi avoir une taille caractéristique $\phi_g$ de grain de speckle dans le plan image supérieure à la taille $a_{pix}$ de pixel du détecteur Det. On choisit par exemple $f_\# = 2$ avec une pupille Diaph du dispositif optique d'imagerie Im de 3.5mm.

La puissance du laser du faisceau objet $L_o$ est égale par exemple à 10mW, une valeur respectant la norme de sécurité oculaire à 1300nm. On choisit par exemple un ratio de Ts égal à 95%/5% entre les puissances émises des voies objet/référence, ce qui donne une puissance de 0.5mW sur le faisceau de référence $L_{ref}$.

En considérant un facteur de réflectance diffuse de la scène Obj lambertienne de 20% et un dispositif optique de recombinaison qui est un cube semi-réfléchissant avec un ratio de $T_{LO}$ égal à 95%/5% en recombinaison, la fraction de puissance de la portion $L_{or,i}$ du faisceau objet réfléchi incidente sur chaque pixel $P_i$ par rapport à la puissance objet émise est $10^{-15}$. Ce rapport est très faible malgré l'ouverture relativement importante du dispositif optique d'imagerie Im, puisqu'une grande partie de la lumière de la voie objet est diffusée en dehors de la pupille de cette optique, la portion traversant la pupille étant ensuite partagée entre tous les pixels $P_i$ du détecteur Det. La fraction de la puissance de la voie de référence incidente dans chaque pixel est nettement supérieure, de l'ordre ici de $10^{-6}$.

On suppose à présent que le photodétecteur Ph est une photodiode en InGaAs avec une efficacité quantique QE de 70% à 1300nm. De plus, afin de respecter le théorème de Shannon, le temps d'intégration (inverse de la fréquence d'échantillonnage) est égal à un tiers de période $1/f_R$. L'équation suivante permet de calculer le flux de photons F sur un pixel $P_i$ du détecteur :

$$F = \underbrace{(\sqrt{\rho_S} - \sqrt{\rho_{LO}})^2 F_t}_{F_{DC}} + \underbrace{4\sqrt{\rho_S \rho_{LO}} F_t \cos^2(\pi f_R t + \varphi)}_{F_{AC}} + \underbrace{\frac{\mathcal{R}T_{opt}}{4f_\#{}^2} E_{sun} a_{pix}{}^2}_{F_{amb}}$$

$$\rho_S = \frac{\mathcal{R}T_s T_{opt} \phi_{opt}{}^2}{4N_{pix}{}^2 z^2} \qquad \rho_{LO} = \frac{T_{LO} T_{opt}}{N_{pix}{}^2}$$

avec R la réflectance de la scène lambertienne, avec $T_S$, $T_{Lo}$, $T_{opt}$ la transmission respectivement du dispositif optique de séparation LS, du dispositif optique de recombinaison SR, et du dispositif optique d'imagerie Im, avec $\phi_{opt}$ le diamètre de la pupille du dispositif optique d'imagerie Im, $N_{pix}$ le nombre de pixel du détecteur, et $E_{sun}$ l'éclairement du soleil.

Après détection du signal hétérodyne, la composante continue DC du signal détecté (c'est-à-dire le signal électronique du flux moyen incident de la voie objet et de la voie de référence sur le pixel) obtenu pendant le temps d'intégration est $F_{DC}$ = 13000 électrons. La composante alternative AC, i.e. le signal utile $F_{AC}$, (le signal électronique représentatif du battement) modulé à la fréquence $f_{Rmax}$, porteur de l'information de distance, varie entre 15 et 140 électrons suivant le positionnement (imprévisible) des temps d'intégration dans le signal sinusoïdal.

Le bruit dominant est le bruit de photons de la voie de référence au niveau de chacun des pixels, correspondant à environ 100 électrons (égal à $\sqrt{F_{DC}}$) dans le temps d'intégration. Le bruit de photons de la lumière parasite ambiante $F_{amb}$ est plus faible (20 électrons de bruit avec la lumière du soleil filtrée au travers d'un filtre passe-bande de largeur 50nm centré sur la longueur d'onde du laser). Le bruit du courant d'obscurité (environ 10 électrons avec un courant d'obscurité de 1pA) et le bruit de lecture (quelques électrons) sont eux aussi bien plus faibles que le bruit de photons. Dans ces conditions, le rapport signal sur bruit, de l'ordre de 1 voire inférieur, est compatible avec la détection et le comptage des pics dans le signal utile $F_{AC}$.

Dans le cas d'un système d'imagerie de type LIDAR FMCW mono-point qui scanne une scène (balayage angulaire) avec une résolution VGA à cadence vidéo, possédant les mêmes paramètres que ceux utilisé dans le calcul précédent, le rapport signal sur bruit est similaire. Cependant, le détecteur devrait avoir une bande passante d'au moins 10GHz, ce qui est possible mais contraignant, et la source laser devrait pouvoir être modulée en longueur d'onde à une fréquence de plusieurs dizaines de MHz avec une amplitude de modulation de plusieurs GHz comme expliqué précédemment. De plus, le dispositif d'illumination doit effectuer un balayage de la scène à une cadence de plusieurs MHz. Ces valeurs sont difficilement compatibles avec les technologies actuelles.

## Revendications

1. Système d'imagerie (D) LIDAR cohérent comprenant :

   ◦ une source laser (SL) configurée pour émettre un rayonnement laser (L) présentant une fréquence optique ($F_L$) modulée temporellement ;
   ◦ un dispositif optique de séparation/recombinaison (SSR) comprenant au moins :

   • un dispositif optique de séparation (LS) adapté à séparer spatialement le rayonnement laser (L) en un faisceau dit faisceau de référence ($L_{ref}$) dirigé vers un dispositif optique d'imagerie (Im), et en un faisceau dit faisceau objet ($L_o$) dirigé vers une scène à éclairer (Obj) ;
   • un dispositif optique de recombinaison (SR) adapté à superposer spatialement le faisceau de référence ($L_{ref}$) à une partie du faisceau objet réfléchi par ladite scène, dite faisceau objet réfléchi ($L_{or}$) ;

   ◦ le dispositif optique d'imagerie (Im) présentant un axe optique (AO), réalisant une image de la scène éclairée sur un détecteur (Det) en focalisant le faisceau objet réfléchi ($L_{or}$),
   ◦ le détecteur (Det) comprenant une matrice de pixels $P_i$, $i \in [1,n]$, chacun des pixels $P_i$ comprenant un photo-détecteur (Ph) adapté à détecter une portion ($L_{or,i}$) du faisceau objet réfléchi ($L_{or}$) et une portion ($L_{ref,i}$) du faisceau de référence ($L_{ref}$) qui forment ensemble une portion d'un faisceau recombiné ($L_{rec}$) présentant une fréquence de battement représentative d'une distance de la scène éclairée ;
   ◦ un processeur (UT) relié au détecteur (Det) et à la source laser (SL), et configuré pour déterminer une distance de points de la scène, imagés sur lesdits pixels et construire une image de distance de ladite scène, à partir de la fréquence de battement ($F_i$) associée à chaque pixel $P_i$ et à partir de la fréquence optique modulée du rayonnement laser ;
   ◦ **caractérisé en ce que** :

   • ledit dispositif optique de séparation/recombinaison (SSR) est en outre configuré pour former une image, dite intermédiaire (PS), du faisceau de référence ($L_{ref}$) dans un plan perpendiculaire audit axe optique, dit plan image intermédiaire (PI),

   - la position du plan image intermédiaire (PI) sur l'axe optique (AO) étant comprise dans un segment (MM') suivant l'axe optique correspondant à la projection sur l'axe optique d'une zone d'intersection (Zc) entre des sous-faisceaux du faisceau objet réfléchi ($L_{or}$), lesdits sous-faisceaux étant des faisceaux de bord de champ de pleine lumière.

2. Système d'imagerie (D) selon la revendication 1, dans lequel ledit dispositif optique de séparation/recombinaison (SSR) est configuré de sorte que le plan image intermédiaire (PI) est confondu avec un plan comprenant une pupille ou un diaphragme d'ouverture dudit dispositif optique d'imagerie (Im).

3. Système d'imagerie (D) selon l'une quelconque des revendications 1 à 2, dans lequel ledit dispositif optique de séparation/recombinaison (SSR) est configuré de sorte qu'une dimension latérale de ladite image intermédiaire (PS) est inférieure ou égale à une dimension latérale de l'intersection desdits sous-faisceaux dans le plan image intermédiaire (PI).

4. Système d'imagerie (D) selon l'une quelconque des revendications 1 à 3, dans lequel ledit dispositif optique de séparation/recombinaison (SSR) est configuré de manière à ce qu'une divergence du faisceau de référence ($L_{ref}$) issu du dispositif optique de séparation/recombinaison est égale à un angle formé par lesdits sous-faisceaux dans le plan image intermédiaire (PI).

5. Système d'imagerie (D) selon l'une quelconque des revendications 1 à 4, dans lequel le dispositif optique de séparation/recombinaison (SSR) est configuré de sorte que, pour chaque pixel $P_i$, un axe de propagation de ladite portion ($L_{or,i}$) du faisceau objet réfléchi ($L_{or}$) forme, avec un axe de propagation de ladite portion ($L_{ref,i}$) du faisceau de référence, un angle $\theta$ tel que $\theta < \lambda/(2 \times a_{pix})$, avec $a_{pix}$ une dimension caractéristique du photodétecteur de chaque pixel du détecteur, et $\lambda$ la longueur d'onde du rayonnement laser (L).

6. Système d'imagerie (D) selon l'une quelconque des revendications 1 à 5, comprenant un dispositif optique de mise en forme (DOE), disposé sur le trajet du rayonnement laser ou du faisceau objet ($L_o$), et configuré pour qu'un faisceau issu du dispositif optique de mise en forme (DOE) présente une illumination uniforme de la scène à observer.

7. Système d'imagerie (D) selon l'une quelconque des revendications 1 à 6, dans lequel le dispositif optique d'imagerie (Im) présente une ouverture numérique telle qu'un diamètre $\phi_g$ de grains de speckle sur le détecteur (Det) est supérieur à une dimension caractéristique $a_{pix}$ du photodétecteur de chaque pixel $P_i$ du détecteur (Det).

8. Système d'imagerie (D) selon l'une quelconque des revendications 1 à 7, dans lequel la source laser (SL) est configurée de sorte que ladite fréquence optique est modulée par une rampe linéaire périodique d'excursion B et de durée T, et pour qu'une longueur de cohérence du rayonnement laser soit deux fois supérieure à une distance prédéterminée maximale $z_{max}$ entre la scène à éclairer (Obj) et le système d'imagerie (D).

9. Système d'imagerie (D) selon l'une quelconque des revendications 1 à 8, dans lequel chaque pixel $P_i$ comprend un circuit électronique de traitement (CE) adapté à calculer la fréquence $F_i$ d'un battement de la portion du faisceau recombiné ($L_{rec}$).

10. Système d'imagerie (D) selon la revendication 9, dans lequel, le calcul de la fréquence du battement $F_i$ étant simultanée pour tous les pixels $P_i$ dudit détecteur (Det), chaque pixel $P_i$ comprenant une couche dite d'interconnexion dans un matériau diélectrique transparent au faisceau recombiné ($L_{rec}$), ladite couche d'interconnexion comprenant des interconnexions métalliques (Met) reliées au circuit électronique (CE), ladite couche d'interconnexion étant agencée d'un côté du photodétecteur opposé à un côté détectant ladite portion ($L_{or,i}$) du faisceau recombiné ($L_{rec}$), ledit circuit électronique associé au pixel $P_i$ étant configuré pour collecter un photocourant généré dans le photodétecteur (Ph) représentatif de la fréquence de battement $F_i$, pour le convertir en tension, puis pour :

   ◦ substituer une composante DC du signal représentatif de la fréquence de battement par une valeur de tension fixe prédéterminée, générant un signal électrique dit signal substitué ; puis
   ◦ amplifier ledit signal substitué, générant un signal amplifié ;
   ◦ détecter, à l'aide d'un comparateur, des pics, ou des fronts montants ou descendants du signal amplifié,
   ◦ procéder à un comptage (Sig) du nombre de périodes détectées, transmettre au processeur un signal représentatif dudit comptage du nombre de périodes détectées,
   ◦ ledit processeur déterminant la distance d'un point de la scène en calculant le nombre N de périodes détectées pendant la durée T de la modulation de la fréquence optique à partir dudit signal représentatif du comptage.

11. Système d'imagerie (D) selon la revendication 9 ou 10, dans lequel une fréquence d'échantillonnage du pixel est supérieure à deux fois, préférentiellement trois fois, une fréquence $F_{R,max}$ correspondant à la fréquence du battement associé à un objet de la scène situé à une distance prédéterminée maximale $z_{max}$, et telle que $F_{R,max} = 2Bz_{max}/cT$, avec c la vitesse de la lumière, et où la source laser (SL) est configurée de sorte que ladite fréquence optique est modulée par une rampe linéaire périodique d'excursion B et de durée T.

12. Système d'imagerie (D) selon l'une quelconque des revendications 1 à 11, dans lequel le dispositif optique de séparation (LS) comprend un circuit d'optique intégré, dit premier circuit d'optique intégré, dans lequel ledit rayonnement laser est couplé, au moins un guide d'onde dudit premier circuit intégré guidant ledit faisceau de référence ($L_{ref}$), le premier circuit optique intégré comprenant en outre une pluralité de guides d'onde comprenant chacun au moins un réseau de diffraction, dit réseau objet, de manière à former le faisceau objet ($L_o$).

13. Système d'imagerie (D) selon l'une quelconque des revendications 1 à 12, dans lequel le dispositif optique de recombinaison (SR) comprend un circuit d'optique intégré, dit deuxième circuit d'optique intégré ($OI_2$), dans lequel ledit faisceau de référence ($L_{ref}$) est couplé au moyen d'un élément optique (FO), le deuxième circuit optique intégré comprenant au moins un guide d'onde comprenant au moins un réseau de diffraction dit réseau de référence (RR), le réseau de référence couplant le faisceau de référence vers l'espace libre et vers le dispositif optique d'imagerie (Im), le deuxième circuit d'optique intégré ($OI_2$) étant agencé dans ledit plan image intermédiaire de manière à ce que le réseau de référence forme l'image intermédiaire (PS).

14. Système d'imagerie (D) selon les revendications 12 et 13, dans lequel ledit élément optique est une fibre optique (FO), guidant ledit faisceau de référence issu du premier circuit optique intégré vers ledit deuxième circuit d'optique intégré.

15. Système d'imagerie (D) selon l'une quelconque des revendications 1 à 11, dans lequel le dispositif optique de séparation/recombinaison comprend un circuit d'optique intégré dans lequel ledit rayonnement laser est couplé, ledit circuit d'optique intégré comprenant le dispositif optique de séparation (LS) et ledit dispositif optique de recombinaison (SR),

○ le dispositif optique de séparation (LS) comprenant une pluralité de guides d'onde du circuit d'optique intégré et comprenant chacun au moins un réseau de diffraction, dit réseau objet, lesdits réseaux objets couplant le faisceau objet vers l'espace libre et la scène à observer,
○ au moins un guide d'onde dudit circuit intégré dit guide d'onde référence (GR) guidant ledit faisceau de référence ($L_{ref}$) vers ledit dispositif optique de recombinaison (SR) comprenant au moins un réseau de diffraction, dit réseau de référence (RR), situé sur ledit guide d'onde de référence, le circuit d'optique intégré étant agencé dans ledit plan image intermédiaire demanière à ce que le réseau de référence forme l'image intermédiaire (PS).

16. Système d'imagerie (D) selon l'une quelconque des revendications 1 à 11, dans lequel le dispositif optique de séparation/recombinaison comprend en outre un dispositif optique intermédiaire (SI), agencé après le dispositif optique de séparation (LS), et avant le dispositif optique de recombinaison (SR), le dispositif optique intermédiaire (SI) étant adapté à focaliser le faisceau de référence et former ladite image intermédiaire.

17. Méthode d'imagerie par un système d'imagerie (D) LIDAR cohérent, comprenant les étapes suivantes :

○ émettre un rayonnement laser (L) par une source laser (SL) présentant une fréquence optique ($F_L$) modulée temporellement ;
○ séparer spatialement, par un dispositif optique de séparation (LS) d'un dispositif optique de séparation/recombinaison (SSR), le rayonnement laser (L) en un faisceau dit faisceau de référence ($L_{ref}$) et en un faisceau dit faisceau objet ($L_o$) dirigé vers une scène à éclairer (Obj) ;
○ superposer spatialement, par un dispositif optique de recombinaison (SR) du dispositif optique de séparation/recombinaison (SSR), un faisceau objet réfléchi par ladite scène, dit faisceau objet réfléchi ($L_{or}$), et le faisceau de référence ($L_{ref}$) ;
○ réaliser, par un dispositif optique d'imagerie (Im), une image de la scène sur un détecteur (Det) en focalisant le faisceau objet réfléchi, ledit détecteur (Det) comprenant une matrice d'une pluralité de pixels $P_i$, $i \in [1,n]$ ;
○ détecter, sur chacun des pixels $P_i$, une portion ($L_{or,i}$) du faisceau objet réfléchi ($L_{or}$) et une portion ($L_{ref,i}$) du faisceau de référence ($L_{ref}$) qui forment ensemble une portion d'un faisceau recombiné ($L_{rec}$) présentant une fréquence de battement représentative d'une distance de la scène éclairée ;
○ déterminer, par un processeur (UT) relié au détecteur (Det) et à la source laser (SL), une distance de points de la scène, imagés sur lesdits pixels et construire une image de distance de ladite scène, à partir de la fréquence de battement ($F_i$) associée à chaque pixel ($P_i$) et à partir de la fréquence optique modulée du rayonnement laser,

**caractérisée en ce que** : ledit dispositif optique de séparation/recombinaison (SSR) étant configuré pour former une image, dite intermédiaire (PS), du faisceau de référence (Lref) dans un plan perpendiculaire audit axe optique, dit plan image intermédiaire (PI), la position du plan image intermédiaire (PI) sur l'axe optique (AO) étant comprise dans un segment (MM') suivant l'axe optique correspondant à la projection sur l'axe optique d'une zone d'intersection entre des sous-faisceaux du faisceau objet réfléchi (Lor), lesdits sous-faisceaux étant des faisceaux de bord de champ de pleine lumière.

**Patentansprüche**

1. Kohärentes LIDAR-Abbildungssystem (D), umfassend:

   - eine Laserquelle (SL), die so konfiguriert ist, dass sie Laserstrahlung (L) mit einer zeitlich modulierten optischen Frequenz ($F_L$) aussendet;
   - ein optisches Gerät zur Trennung/Rekombination (SSR), das mindestens Folgendes umfasst:

     -- ein optisches Gerät zur Trennung (LS), das die Laserstrahlung (L) räumlich in einen sogenannten Referenzstrahl ($L_{ref}$), der auf ein optisches Abbildungsgerät (Im) gerichtet ist, und in einen sogenannten Objektstrahl ($L_o$), der auf eine zu beleuchtende Szene (Obj) gerichtet ist, aufteilen kann;
     -- ein optisches Gerät zur Rekombination (SR), das den Referenzstrahl ($L_{ref}$) räumlich mit einem Teil des von der Szene reflektierten Objektstrahls, dem reflektierten Objektstrahl ($L_{or}$), überlagern kann;

   - das optische Abbildungsgerät (Im) eine optische Achse (AO) aufweist und ein Bild der beleuchteten Szene auf einem Detektor (Det) durch Fokussieren des reflektierten Objektstrahls ($L_{or}$) erzeugt,
   - der Detektor (Det) eine Matrix von Pixeln $P_i$, $i \in [1,n]$ umfasst, wobei jedes der Pixel $P_i$ einen Fotodetektor (Ph) umfasst, der einen Abschnitt ($L_{or,i}$) des reflektierten Objektstrahls ($L_{or}$) und einen Abschnitt ($L_{ref,i}$) des Referenzstrahls ($L_{ref}$) erfassen kann, die zusammen einen Abschnitt eines rekombinierten Strahls ($L_{rec}$) bilden, der eine Überlagerungsfrequenz aufweist, die für einen Abstand von der beleuchteten Szene repräsentativ ist;
   - einen Prozessor (UT), der mit dem Detektor (Det) und der Laserquelle (SL) verbunden ist und konfiguriert ist, um eine Entfernung von Punkten der Szene, die auf den Pixeln abgebildet sind, zu bestimmen und ein Entfernungsbild der Szene aus der Überlagerungsfrequenz ($F_i$), die mit jedem Pixel $P_i$ verbunden ist, und aus der modulierten optischen Frequenz der Laserstrahlung zu konstruieren;
   - **dadurch gekennzeichnet, dass**

     -- das optische Gerät zur Trennung/Rekombination (SSR) ferner so konfiguriert ist, dass es ein sogenanntes Zwischenbild (PS) des Referenzstrahls ($L_{ref}$) in einer Ebene senkrecht zur optischen Achse, der sogenannten Zwischenbildebene (PI), bildet,
     --- die Position der Zwischenbildebene (PI) auf der optischen Achse (AO) innerhalb eines Segments (MM') entlang der optischen Achse liegt, das der Projektion einer Kreuzungszone (Zc) zwischen Teilstrahlen des reflektierten Objektstrahls ($L_{or}$) auf die optische Achse entspricht, wobei die Teilstrahlen Volllichtfeldrandstrahlen sind.

2. Abbildungssystem (D) nach Anspruch 1, wobei das optische Gerät zur Trennung/Rekombination (SSR) so konfiguriert ist, dass die Zwischenbildebene (PI) mit einer Ebene zusammenfällt, die eine Pupille oder eine Aperturblende des optischen Abbildungsgeräts (Im) enthält.

3. Abbildungssystem (D) nach einem der Ansprüche 1 bis 2, wobei das optische Gerät zur Trennung/Rekombination (SSR) so konfiguriert ist, dass eine seitliche Abmessung des Zwischenbildes (PS) kleiner oder gleich einer seitlichen Abmessung des Schnittpunktes der Teilstrahlen in der Zwischenbildebene (PI) ist.

4. Abbildungssystem (D) nach einem der Ansprüche 1 bis 3, wobei das optische Gerät zur Trennung/Rekombination (SSR) so konfiguriert ist, dass eine Divergenz des Referenzstrahls ($L_{ref}$) aus dem optischen Gerät zur Trennung/Rekombination gleich einem Winkel ist, der von den Teilstrahlen in der Zwischenbildebene (PI) gebildet wird.

5. Abbildungssystem (D) nach einem der Ansprüche 1 bis 4, wobei das optische Gerät zur Trennung/Rekombination (SSR) so konfiguriert ist, dass für jedes Pixel $P_i$ eine Ausbreitungsachse des Abschnitts ($L_{or,i}$) des reflektierten Objektstrahls ($L_{or}$), mit einer Ausbreitungsachse des Abschnitts ($L_{ref,i}$) des Referenzstrahls einen Winkel $\theta$ bildet, sodass $\theta < \lambda/(2 \times a_{pix})$, wobei $a_{pix}$ eine charakteristische Dimension des Photodetektors jedes Pixels des Detektors ist, und $\lambda$ die Wellenlänge der Laserstrahlung (L) ist.

6. Abbildungssystem (D) nach einem der Ansprüche 1 bis 5, umfassend ein optisches Gerät zur Formgebung (DOE), das im Weg der Laserstrahlung oder des Objektstrahls ($L_o$) angeordnet ist und so konfiguriert ist, dass ein Strahl aus dem optischen Gerät zur Formgebung (DOE) eine gleichmäßige Beleuchtung der zu beobachtenden Szene aufweist.

7. Abbildungssystem (D) nach einem der Ansprüche 1 bis 6, wobei das optische Abbildungsgerät (Im) eine solche numerische Apertur aufweist, dass ein Durchmesser $\varphi_g$ von Streukörnern auf dem Detektor (Det) größer ist als eine charakteristische Abmessung $a_{pix}$ des Photodetektors jedes Pixels $P_i$ des Detektors (Det).

8. Abbildungssystem (D) nach einem der Ansprüche 1 bis 7, wobei die Laserquelle (SL) so konfiguriert ist, dass die optische Frequenz durch eine periodische lineare Rampe mit der Auslenkung B und der Dauer T moduliert wird, und dass eine Kohärenzlänge der Laserstrahlung doppelt so groß ist wie ein maximaler vorbestimmter Abstand $z_{max}$ zwischen der zu beleuchtenden Szene (Obj) und dem Abbildungssystem (D).

9. Abbildungssystem (D) nach einem der Ansprüche 1 bis 8, wobei jedes Pixel $P_i$ eine elektronische Verarbeitungsschaltung (CE) umfasst, die geeignet ist, die Überlagerungsfrequenz $F_i$ des Abschnitts des rekombinierten Strahls ($L_{rec}$) zu berechnen.

10. Abbildungssystem (D) nach Anspruch 9, wobei die Berechnung der Überlagerungsfrequenz $F_i$ für alle Pixel $P_i$ des Detektors (Det) gleichzeitig erfolgt, wobei jedes Pixel $P_i$ eine sogenannte Zwischenverbindungsschicht aus einem dielektrischen Material umfasst, das für den rekombinierten Strahl ($L_{rec}$) transparent ist, wobei die Zwischenverbindungsschicht metallische Zwischenverbindungen (Met) umfasst, die mit der elektronischen Schaltung (CE) verbunden sind, wobei die Verbindungsschicht auf einer Seite des Fotodetektors angeordnet ist, die einer Seite gegenüberliegt, die den Abschnitt ($L_{or,i}$) des rekombinierten Strahls ($L_{rec}$) darstellt, wobei die dem Pixel $P_i$ zugeordnete elektronische Schaltung so konfiguriert ist, dass sie einen im Fotodetektor (Ph) erzeugten Fotostrom, der die Überlagerungsfrequenz $F_i$ darstellt, sammelt, um ihn in eine Spannung umzuwandeln und dann:

    - Ersetzen einer DC-Komponente des die Überlagerungsfrequenz darstellenden Signals durch einen vorbestimmten festen Spannungswert, wodurch ein elektrisches Signal, das substituierte Signal, erzeugt wird; und dann
    - Verstärken des substituierten Signals, wodurch ein verstärktes Signal erzeugt wird;
    - Erkennen von Spitzen, steigenden oder fallenden Flanken des verstärkten Signals mit Hilfe eines Komparators,
    - Durchführen einer Zählung (Sig) der Anzahl der erkannten Perioden, Übertragen eines Signals, das für die Zählung der Anzahl der erkannten Perioden repräsentativ ist, an den Prozessor,
    - wobei der Prozessor die Entfernung eines Punktes der Szene bestimmt, indem er die Anzahl N von Perioden, die während der Dauer T der Modulation der optischen Frequenz erfasst werden, aus dem repräsentativen Zählsignal berechnet.

11. Abbildungssystem (D) nach Anspruch 9 oder 10, wobei eine Pixelabtastfrequenz größer als das Zweifache, vorzugsweise das Dreifache, einer Frequenz $F_{R,max}$ ist, die der Überlagerungsfrequenz entspricht, die mit einem Szenenobjekt verbunden ist, das sich in einem maximalen vorbestimmten Abstand $z_{max}$ befindet, und derart, dass $F_{R,max} = 2Bz_{max}/cT$, mit c die Lichtgeschwindigkeit, und wobei die Laserquelle (SL) so konfiguriert ist, dass die optische Frequenz durch eine periodische lineare Rampe mit der Auslenkung B und der Dauer T moduliert wird.

12. Abbildungssystem (D) nach einem der Ansprüche 1 bis 11, wobei das optische Abbildungsgerät (LS) eine integrierte optische Schaltung, die erste integrierte optische Schaltung genannt wird, umfasst, in die die Laserstrahlung eingekoppelt wird, wobei mindestens ein Wellenleiter der ersten integrierten Schaltung den Referenzstrahl ($L_{ref}$) führt, wobei die erste integrierte optische Schaltung ferner eine Vielzahl von Wellenleitern umfasst, von denen jeder mindestens ein Beugungsgitter, das Objektgitter genannt wird, umfasst, um den Objektstrahl ($L_o$) zu formen.

13. Abbildungssystem (D) nach einem der Ansprüche 1 bis 12, wobei das optische Gerät zur Rekombination (SR) eine integrierte optische Schaltung umfasst, die zweite integrierte optische Schaltung ($OI_2$) genannt wird, in die der Referenzstrahl ($L_{ref}$) mit Hilfe eines optischen Elements (FO) eingekoppelt wird, die zweite integrierte optische Schaltung mindestens einen Wellenleiter mit mindestens einem Beugungsgitter umfasst, das als Referenzgitter (RR) bezeichnet wird, wobei das Referenzgitter den Referenzstrahl in den freien Raum und in das optische Gerät zur Formgebung (Im) koppelt, wobei die zweite integrierte optische Schaltung ($OI_2$) in der Zwischenbildebene so angeordnet ist, dass das Referenzgitter das Zwischenbild (PS) formt.

14. Abbildungssystem (D) nach Anspruch 12 und 13, wobei das optische Element eine optische Faser (FO) ist, die den Referenzstrahl von der ersten integrierten optischen Schaltung zu der zweiten integrierten optischen Schaltung führt.

15. Abbildungssystem (D) nach einem der Ansprüche 1 bis 11, wobei das optische Gerät zur Trennung/Rekombination eine integrierte optische Schaltung umfasst, in welche die Laserstrahlung eingekoppelt wird, wobei die integrierte optische Schaltung das optische Gerät zur Trennung (LS) und das optische Gerät zur Rekombination (SR) umfasst,

    - das optische Gerät zur Trennung (LS) eine Vielzahl von Wellenleitern der integrierten optischen Schaltung umfasst und jeder mindestens ein Beugungsgitter, das so genannte Objektgitter, umfasst, wobei die Objektgitter den Objektstrahl in den freien Raum und das zu beobachtende Szenenobjekt koppeln,
    - mindestens ein Wellenleiter der integrierten Schaltung, der als Referenzwellenleiter (GR) bezeichnet wird, den Referenzstrahl ($L_{ref}$) zu dem optischen Gerät zur Rekombination (SR) führt, das mindestens ein Beugungsgitter, das als Referenzgitter (RR) bezeichnet wird, enthält, das sich auf dem Referenzwellenleiter befindet, wobei die integrierte optische Schaltung in der Zwischenbildebene so angeordnet ist, dass das Referenzgitter das Zwischenbild (PS) bildet.

16. Abbildungssystem (D) nach einem der Ansprüche 1 bis 11, wobei das optische Gerät zur Trennung/Rekombination ferner ein optisches Zwischengerät (SI) umfasst, das nach dem optischen Gerät zur Trennung (LS) und vor dem optischen Gerät zur Rekombination (SR) angeordnet ist, wobei das optische Zwischengerät (SI) so beschaffen ist, dass es den Referenzstrahl fokussiert und das Zwischenbild bildet.

17. Verfahren zum Abbilden durch ein kohärentes Abbildungssystem (D) LIDAR, umfassend die folgenden Schritte:

    - Emittieren von Laserstrahlung (L) von einer Laserquelle (SL) mit einer zeitlich modulierten optischen Frequenz ($F_L$);
    - Trennen der Laserstrahlung (L) durch ein optisches Gerät zurTrennung (LS) eines optischen Geräts zur Trennung/Rekombination (SSR) räumlich in einen als Referenzstrahl ($L_{ref}$) bezeichneten Strahl und in einen als Objektstrahl ($L_o$) bezeichneten Strahl, der auf ein zu beleuchtendes Szenenobjekt (Obj) gerichtet ist;
    - Überlagern eines von der Szene reflektierten Objektstrahls, des so genannten reflektierten Objektstrahls ($L_{or}$), und des Referenzstrahls ($L_{ref}$) durch ein optisches Gerät zur Trennung/Rekombination (SR) des optischen Geräts zur Rekombination (SSR) in räumlicher Hinsicht;
    - Erstellen, durch ein optisches Abbildungsgerät (Im), eines Bildes des Szenenobjekts auf einem Detektor (Det) durch Fokussieren des reflektierten Objektstrahls, wobei der Detektor (Det) eine Matrix aus einer Vielzahl von Pixeln $P_i$, $i \in [1,n]$ umfasst;
    - Erkennen, auf jedem der Pixel $P_i$, eines Abschnitts ($L_{or,i}$) des reflektierten Objektstrahls ($L_{or}$) und eines Abschnitts ($L_{ref}$) des Referenzstrahls ($L_{ref}$), die zusammen einen Abschnitt eines rekombinierten Strahls ($L_{rec}$) bilden, der eine Überlagerungsfrequenz aufweist, die für eine Entfernung des beleuchteten Szenenobjekts repräsentativ ist;
    - Bestimmen, durch einen Prozessor (UT), der mit dem Detektor (Det) und der Laserquelle (SL) verbunden ist, einer Entfernung von Punkten der Szene, die auf den Pixeln abgebildet sind, und Konstruieren eines Entfernungsbildes der Szene, ausgehend von der Überlagerungsfrequenz ($F_i$), die jedem Pixel ($P_i$) zugeordnet ist, und ausgehend von der modulierten optischen Frequenz der Laserstrahlung,

    **dadurch gekennzeichnet, dass**:
    das optische Gerät zur Trennung/Rekombination (SSR) so konfiguriert ist, dass es ein Bild, das so genannte Zwischenbild (PS), des Referenzstrahls (Lref) in einer Ebene senkrecht zur optischen Achse, der so genannten Zwischenbildebene (PI), bildet, wobei die Position der Zwischenbildebene (PI) auf der optischen Achse (AO) in einem Segment (MM') entlang der optischen Achse enthalten ist, das der Projektion einer Schnittpunktzone zwischen Volllichtfeldrandstrahlen des reflektierten Objektstrahls (Lor) auf die optische Achse entspricht, wobei die Teilstrahlen Volllichtfeldrandstrahlen sind.

**Claims**

1. A coherent LIDAR imaging system (D) comprising:

    ○ a laser source (SL) configured to emit a laser radiation (L) having a temporally modulated optical frequency ($F_L$),
    ○ an optical separation/recombination device (SSR) comprising at least:

        • one optical separation device (LS) adapted to spatially separate the laser radiation (L) into a beam called reference beam ($L_{ref}$) directed towards an optical imaging device (Im), and into a beam called object beam

($L_o$) directed towards a scene to be illuminated (Obj)

• an optical recombination device (SR) adapted to spatially superimpose the reference beam ($L_{ref}$) on a portion of the object beam reflected by said scene, called reflected object beam ($L_{or}$);

○ the optical imaging device (Im) having an optical axis (AO), producing an image of the illuminated scene on a detector (Det) by focusing the reflected object beam ($L_{or}$),

○ the detector (Det) comprising a matrix of pixels $P_i$, $i \in [1,n]$, each of the pixels $P_i$ comprising a photodetector (Ph) adapted to detect a portion ($L_{or,i}$) of the reflected object beam ($L_{or}$) and a portion ($L_{ref,i}$) of the reference beam ($L_{ref}$) which together form a portion of a recombined beam ($L_{rec}$) having a beat frequency representative of a distance from the illuminated scene;

○ a processor (UT) connected to the detector (Det) and to the laser source (SL), and configured to determine a distance of points from the scene, imaged on said pixels and construct an image of distance from said scene, from the beat frequency ($F_i$) associated with each pixel $P_i$ and from the modulated optical frequency of the laser radiation;

○ **characterised in that**:

• said optical separation/recombination device (SSR) is further configured to form an image, called intermediate image (PS), of the reference beam ($L_{ref}$) in a plane perpendicular to said optical axis, called intermediate image plane (PI),

- the position of the intermediate image plane (PI) on the optical axis (AO) being comprised in a segment (MM') along the optical axis corresponding to the projection on the optical axis of an intersection area (Zc) between sub-beams of the reflected object beam ($L_{or}$), said sub-beams being full light field edge beams.

2. The imaging system (D) according to claim 1, wherein said optical separation/recombination device (SSR) is configured such that the intermediate image plane (PI) coincides with a plane comprising a pupil or an aperture diaphragm of said optical imaging device (Im).

3. The imaging system (D) according to any one of claims 1 to 2, wherein said optical separation/recombination device (SSR) is configured such that a lateral dimension of said intermediate image (PS) is less than or equal to a lateral dimension of the intersection of said sub-beams in the intermediate image plane (PI).

4. The imaging system (D) according to any one of claims 1 to 3, wherein said optical separation/recombination device (SSR) is configured so that a divergence of the reference beam ($L_{ref}$) from the optical separation/recombination device is equal to an angle formed by said sub-beams in the intermediate image plane (PI).

5. The imaging system (D) according to any one of claims 1 to 4, wherein the optical separation/recombination device (SSR) is configured such that, for each pixel $P_i$, a propagation axis of said portion ($L_{or,i}$) of the reflected object beam ($L_{or}$) forms, with a propagation axis of said portion ($L_{ref,i}$) of the reference beam, an angle $\theta$ such that $\theta < \lambda/(2 \times a_{pix})$ , with $a_{pix}$ a characteristic dimension of the photodetector of each pixel of the detector, and $\lambda$ the wavelength of the laser radiation (L).

6. The imaging system (D) according to any one of claims 1 to 5, comprising an optical shaping device (DOE), disposed on the path of the laser radiation or the object beam ($L_o$), and configured so that a beam from the optical shaping device (DOE) has a uniform illumination of the scene to be observed.

7. The imaging system (D) according to any one of claims 1 to 6, wherein the optical imaging device (Im) has a numerical aperture such that a diameter ($\phi_g$) of speckle grains on the detector (Det) is greater than a characteristic dimension $a_{pix}$ of the photodetector of each pixel $P_i$ of the detector (Det).

8. The imaging system (D) according to any one of claims 1 to 7, wherein the laser source (SL) is configured such that said optical frequency is modulated by a periodic linear ramp of excursion B and duration T, and so that a coherence length of the laser radiation is twice as great as a maximum predetermined distance $z_{max}$ between the scene to be illuminated (Obj) and the imaging system (D).

9. The imaging system (D) according to any one of claims 1 to 8, wherein each pixel Pi comprises an electronic processing circuit (CE) adapted to calculate the frequency $F_i$ of a beat of the portion of the recombined beam ($L_{rec}$).

10. The imaging system (D) according to claim 9, wherein, the calculation of the beat frequency $F_i$ being simultaneous for all pixels $P_i$ of said detector (Det), each pixel $P_i$ comprising a layer called interconnection layer in a dielectric material transparent to the recombined beam ($L_{rec}$), said interconnection layer comprising metal interconnections (Met) connected to the electronic circuit (CE), said interconnection layer being arranged on one side of the photodetector opposite to a side detecting said portion ($L_{or,i}$) of the recombined beam ($L_{rec}$), said electronic circuit associated with the pixel $P_i$ being configured to collect a photocurrent generated in the photodetector (Ph) representative of the beat frequency $F_i$, to convert it into voltage, then to:

   ◦ substitute a component DC of the signal representative of the beat frequency by a predetermined fixed voltage value, generating an electrical signal called substituted signal; then
   ◦ amplify said substituted signal, generating an amplified signal;
   ◦ detect, using a comparator, peaks, or rising or falling edges of the amplified signal,
   ◦ carry out a count (Sig) of the number of detected periods, transmit a signal representative of said count of the number of detected periods to the processor,
   ◦ said processor determining the distance of a point from the scene by calculating the number N of periods detected during the duration T of the modulation of the optical frequency from said signal representative of the count.

11. The imaging system (D) according to claim 9 or 10, wherein a sampling frequency of the pixel is greater than twice, preferably three times, a frequency $F_{R,max}$ corresponding to the frequency of the beat associated with an object of the scene located at a maximum predetermined distance $z_{max}$, and such that $F_{R,max} = 2Bz_{max}/cT$, with c the speed of light, and where the laser source (SL) is configured such that said optical frequency is modulated by a periodic linear ramp of excursion B and duration T.

12. The imaging system (D) according to any one of claims 1 to 11, wherein the optical separation device (LS) comprises an integrated optical circuit, called first integrated optical circuit, in which said laser radiation is coupled, at least one waveguide of said first integrated circuit guiding said reference beam ($L_{ref}$), the first integrated optical circuit further comprising a plurality of waveguides each comprising at least one diffraction grating, called object grating, so as to form the object beam ($L_o$).

13. The imaging system (D) according to any one of claims 1 to 12, wherein the optical recombination device (SR) comprises an integrated optical circuit, called second integrated optical circuit ($OI_2$), in which said reference beam ($L_{ref}$) is coupled by means of an optical element (FO), the second integrated optical circuit comprising at least one waveguide comprising at least one diffraction grating called reference grating (RR), the reference grating coupling the reference beam to the free space and to the optical imaging device (Im), the second integrated optical circuit ($OI_2$) being arranged in said intermediate image plane so that the reference grating forms the intermediate image (PS).

14. The imaging system (D) according to claims 12 and 13, wherein said optical element is an optical fibre (FO), guiding said reference beam from the first integrated optical circuit to said second integrated optical circuit.

15. The imaging system (D) according to any one of claims 1 to 11, wherein the optical separation/recombination device comprises an integrated optical circuit into which said laser radiation is coupled, said integrated optical circuit comprising the optical separation device (LS) and said optical recombination device (SR),

   ◦ the optical separation device (LS) comprising a plurality of waveguides of the integrated optical circuit and each comprising at least one diffraction grating, called object grating, said object gratings coupling the object beam to free space and the scene to be observed,
   ◦ at least one waveguide of said integrated circuit called reference waveguide (GR) guiding said reference beam ($L_{ref}$) towards said optical recombination device (SR) comprising at least one diffraction grating, called reference grating (RR), located on said reference waveguide, the integrated optical circuit being arranged in said intermediate image plane so that the reference grating forms the intermediate image (PS).

16. The imaging system (D) according to any one of claims 1 to 11, wherein the optical separation/recombination device further comprises an intermediate optical device (SI), arranged after the optical separation device (LS), and before the optical recombination device (SR), the intermediate optical device (SI) being adapted to focus the reference beam and form said intermediate image.

17. An imaging method by a coherent LIDAR imaging system (D), comprising the following steps:

◦ emitting a laser radiation (L) by a laser source (SL) having a temporally modulated optical frequency ($F_L$);

◦ spatially separating, by an optical separation device (LS) of an optical separation/recombination device (SSR), the laser radiation (L) into a beam called reference beam ($L_{ref}$) and into a beam called object beam ($L_o$) directed towards a scene to be illuminated (Obj);

◦ spatially superimposing, by an optical recombination device (SR) of the optical separation/recombination device (SSR), an object beam reflected by said scene, called reflected object beam ($L_{or}$), and the reference beam ($L_{ref}$);

◦ producing, by an optical imaging device (Im), an image of the scene on a detector (Det) by focusing the reflected object beam, said detector (Det) comprising a matrix of a plurality of pixels $P_i$, $i \in [1,n]$;

◦ detecting, on each of the pixels $P_i$, a portion ($L_{or,i}$) of the reflected object beam ($L_{or}$) and a portion ($L_{ref,i}$) of the reference beam ($L_{ref}$) which together form a portion of a recombined beam ($L_{rec}$) having a beat frequency representative of a distance from the illuminated scene;

◦ determining, by a processor (UT) connected to the detector (Det) and to the laser source (SL), a distance of points from the scene, imaged on said pixels and constructing an image of distance from said scene, from the beat frequency ($F_i$) associated with each pixel ($P_i$) and from the modulated optical frequency of the laser radiation,

**characterised in that**:

said optical separation/recombination device (SSR) being configured to form an image, called intermediate image (PS), of the reference beam (Lref) in a plane perpendicular to said optical axis, called intermediate image plane (PI), the position of the intermediate image plane (PI) on the optical axis (AO) being comprised in a segment (MM') along the optical axis corresponding to the projection, on the optical axis, of an intersection area between sub-beams of the reflected object beam (Lor), said sub-beams being full light field edge beams.

FIG.1A

FIG.1B

FIG.2

**Fig.3A**

**Fig.3B**

Fig.4A

Fig.4B

**Fig.4C**

**Fig.4D**

**Fig.5A**

**Fig.5B**

**Fig.6**

**Fig.7**

**Fig.8**

**Fig.9**

**Fig.10**

**Fig.11**

**Fig.12A**

**Fig.12B**

$$\phi_g < a_{pix} \qquad\qquad \phi_g > a_{pix}$$

i détecté

i détecté

$T_e = 1/f_R$

$F_{AC}$ : signal utile

$F_{amb}$

$F_{DC}$

**Fig.13**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2019041274 A1
- US 2017118423 A1
- US 2018232048 A1
- US 5610705 A

**Littérature non-brevet citée dans la description**

- **DE AFLATOUNI et al.** *Nanophotonic cohérent imager, Opt. Express,* 2015, vol. 23 (4), 5117-5125
- **KRAUSE et al.** intitulé Motion compensated frequency modulated continuous wave 3D coherent imaging ladar with scannerless architecture,. *Appl. Opt.,* 2012, vol. 51 (36), 8745-8761
- **DE AMANN et al.** Laser ranging: a critical review of usual techniques for distance measurement. *Opt. Eng.,* 10 Janvier 2001, vol. 40 (1
- **J. E. GREIVENKAMP.** Field Guide to Geometrical Optics. SPIE Press, 2004